# EUROPEAN PATENT APPLICATION

(11) **EP 4 773 518 A1**
(43) Date of publication of application: **08.07.2026**
(21) Application number: 24857914.6
(22) Date of filing: 04.06.2024
(51) Int. Cl.: H04B 7/185

(54) **METHOD AND APPARATUS FOR IMPLEMENTING INTER-SATELLITE STORE-AND-FORWARD FUNCTION, AND DEVICE AND MEDIUM**

(30) Priority: 30.08.2023 CN 202311104246
(71) Applicant: Datang Mobile Communications Equipment Co., Ltd., Beijing 100085 (CN)
(72) Inventor: WU, Liping, Beijing 100085 (CN); WAN, Qing, Beijing 100085 (CN)
(74) Representative: Studio Torta S.p.A.
(86) International application number: PCT/CN2024/097214
(87) International publication number: WO 2025/044369

(57) **Abstract**

The present disclosure provides a method and device for implementing on-board store-and-forward function, equipment and medium, to solve the problem of how an application enabler layer assists the network in realizing an on-board communication service in scenarios where satellite access is satisfied. The method for implementing on-board store-and-forward function in the present disclosure includes: determining a third on-board store-and-forward parameter according to one or more of a data service request, UE capability information, a first on-board store-and-forward parameter transmitted by a core network device and pre-configured second on-board store-and-forward parameter.

## Description

The present application is filed based on and claims the priority of Chinese Application No. 202311104246.9 filed on August 30, 2023, entitled "method and device for implementing on-board store-and-forward function, equipment and medium", the disclosure of which are incorporated in their entireties by reference herein.

### TECHNICAL FIELD

The present disclosure relates to the field of communication technology, and in particular to a method and device for implementing on-board store-and-forward function, equipment and medium.

### BACKGROUND

In remote areas, disaster areas, and other regions where it is difficult to deploy terrestrial base stations, mobile communication networks can provide UEs with communication services to access the terrestrial network through satellites. However, in actual deployment, due to limited number of gateway stations or site availability constraints, some areas (such as over oceans or in polar regions) are covered by the satellite network but lack a local gateway station to provide real-time connectivity to the terrestrial network.

At present, an application enabler layer, such as a service enabler architecture layer (SEAL) and an edge application (EDGEAPP), does not consider satellite access scenarios where some areas are covered by the satellite base station but lack a local gateway station to provide real-time connectivity to the terrestrial network. How to assist the network to realize satellite-based communication services is an urgent problem to be solved.

### SUMMARY

An object of the present disclosure is to provides a method and device for implementing on-board store-and-forward function, equipment and medium, which can solve the problem of how an application enabler layer assists the network in realizing an on-board communication service in scenarios where satellite access is satisfied.

In a first aspect, one embodiment of the present disclosure provides a method for implementing on-board store-and-forward function, applied to a first server, including:
determining a third on-board store-and-forward parameter according to one or more of a data service request, UE capability information, a first on-board store-and-forward parameter transmitted by a core network device and pre-configured second on-board store-and-forward parameter.

The method further includes:
transmitting the third on-board store-and-forward parameter to at least one of the UE, a second server and the core network device.

The method further includes:
receiving a first request transmitted by the UE; wherein the first request is used to request reporting or updating UE capability information, and the first request carries the UE capability information;
after the UE is authenticated, transmitting a first response to the UE, and storing or updating the UE capability information.

The UE capability information includes one or more of the following information:
identifier of a servicing satellite;
supported satellite access mode;
support on-board S&F mode;
on-board store-and-forward parameter.

The method further includes:
receiving a second request transmitted by the UE; wherein the second request is used to request to query an on-board store-and-forward parameter required by an application layer network;
wherein the transmitting the third on-board store-and-forward parameter to the UE, includes:
after the UE is authenticated, transmitting a second response to the UE; wherein the second response includes the third on-board store-and-forward parameter, and the third on-board store-and-forward parameter is an on-board store-and-forward parameter queried through the first server.

The on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

The method further includes:
receiving a data service request transmitted by the second server; wherein the data service request includes time for data transmission and a maximum data transfer volume within a preset time.

The method further includes:
receiving a data service change request transmitted by the second server; wherein the data service change request is used to request to update or delete an on-board store-and-forward parameter;
changing a locally stored on-board store-and-forward parameter based on the data service change request;
transmitting a changed on-board store-and-forward parameter to at least one of the UE, the second server and the core network device.

The method further includes:
transmitting first subscription information to the UE and transmitting second subscription information to the core network device, respectively; wherein the first subscription information is subscription information related to a store-and-forward state for the UE, and the second subscription information is subscription information related to a store-and-forward state for the UE and/or an on-board equipment;
receiving a first notification transmitted by the UE and a second notification transmitted by the core network device, respectively; wherein the first notification is used to notify a first store-and-forward state of the UE, and the second notification is used to notify a second store-and-forward state;
updating the on-board store-and-forward parameters of the UE and/or on-board equipment stored locally according to the first store-and-forward state and the second store-and-forward state;
according to the updated on-board store-and-forward parameter, determining on-board network maximum S&F data storage quota and on-board network maximum S&F data retention remaining available to the UE.

The transmitting first subscription information to the UE, includes:
transmitting a first subscription request to the UE; wherein the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

The transmitting second subscription information to the core network device, includes:
transmitting a second subscription request to the core network device; wherein the second subscription request includes the second subscription information.

The method further includes:
when an amount of downlink data received from the second server exceeds the UE's remaining available on-board network maximum S&F data storage quota, performing one of the following:
transmitting a third notification for suspending transmission of downlink data to the second server; where the second notification includes the on-board network maximum S&F data retention and the reason for suspending transmission of data;
transmitting a fourth notification for rejecting transmission of the downlink data to the second server; where the fourth notification includes a reason for rejecting transmission of the data;
transmitting a first part of downlink data to the UE, and transmitting a fifth notification to the second server; where the data volume of the first part of downlink data is equal to the on-board network maximum S&F data storage quota remaining available to the UE, and the fifth notification is a notification for rejecting transmission of the remaining part of the downlink data, and the fifth notification includes the reason for rejecting transmission of the data.

After transmitting the third notification for suspending transmission of downlink data to the second server, the method further includes:
requesting the second server to increase the on-board network maximum S&F data storage quota for the UE;
when the second server allows increase of the on-board network maximum S&F data storage quota for the UE, requesting the UE and the core network device to update the on-board network maximum S&F data storage quota of the UE, respectively;
in a case where the UE and the core network device allow updating of the on-board network maximum S&F data storage quota of the UE, based on a third store-and-forward state, updating the on-board store-and-forward parameters of the UE and/or the on-board equipment stored locally; where the third store-and-forward state is obtained through the UE and the core network device, and the third store-and-forward state includes store-and-forward states of the UE and/or the on-board equipment;
transmitting a retransmission request for the downlink data to the second server;
receiving a retransmission response returned by the second server after the second server determines that the downlink data does not exceed the on-board network maximum S&F data retention.

The method further includes:
when determining, according to the on-board network maximum S&F data storage quota remaining available for the UE, that the on-board network data storage space used by the UE has reached an alarm threshold, determining a forwarding strategy for cached data, and transmitting a sixth notification to the core network device, where the sixth notification is used to notify that the on-board network data storage space used by the UE has reached the alarm threshold. The forwarding strategy includes:
rejecting to forward newly added data in the cached data;
for first data other than the newly added data in the cached data, forwarding the first data according to pre-obtained forwarding priorities corresponding to the first data.

The forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

The method further includes:
receiving forwarding priorities corresponding to different data transmitted by the second server.

The method further includes:
when receiving newly added downlink data from the second server, rejecting to forward the newly added downlink data according to the forwarding strategy;
transmitting a seventh notification for rejecting transmission of the newly added downlink data to the second server; wherein the seventh notification includes a reason for rejecting transmission of the data.

In a second aspect, one embodiment of the present disclosure provides a method for implementing on-board store-and-forward function, applied to a user equipment (UE), including:
receiving a third on-board store-and-forward parameter transmitted by a first server;
updating a target on-board store-and-forward parameter that match itself according to one or more of the third on-board store-and-forward parameter, the first on-board store-and-forward parameter transmitted by the core network device and the pre-configured fourth on-board store-and-forward parameter; and performing on-board store-and-forward processing based on the target on-board store-and-forward parameter.

The method further includes:
transmitting a first request to the first server; wherein the first request is used to request reporting or updating UE capability information, and the first request carries the UE capability information;
receiving a first response to the first request transmitted by the first server.

The UE capability information includes one or more of the following information:
identifier of a servicing satellite;
supported satellite access mode;
support on-board S&F mode;
on-board store-and-forward parameter.

The method further includes:
transmitting a second request to the first server; wherein the second request is used to request to query on-board store-and-forward parameters required by the application layer network;
wherein the receiving a first response to the first request transmitted by the first server, includes:
receiving a second response transmitted by the first server; wherein the second response includes the third on-board store-and-forward parameter, and the third on-board store-and-forward parameter is an on-board storage-and-forward parameter queried through the first server.

The on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

The performing on-board store-and-forward processing based on the target on-board store-and-forward parameter, includes:
if there is uplink data to be transmitted and there is no uplink satellite connection, caching the uplink data and starting a first timer;
when an uplink satellite connection is detected, if the first timer does not exceed the maximum S&F data retention and an amount of cached uplink data does not exceed the on-board network maximum S&F data storage quota, transmitting the cached uplink data to the first server; or,
when an uplink satellite connection is detected, if the first timer exceeds the on-board network maximum S&F data retention, and/or the cached uplink data exceeds the on-board network maximum S&F data storage quota, processing the cached uplink data according to a preset strategy.

The processing the cached uplink data according to a preset strategy, one or more of the following:
discarding the uplink data;
negotiating with the network whether to retransmit the uplink data;
transmitting the uplink data in segments, where each segment of uplink data is smaller than or equal to the on-board network maximum S&F data storage quota.

The method further includes:
receiving first subscription information transmitted by the first server; wherein the first subscription information is subscription information related to a store-and-forward state for the UE, and the first subscription information includes subscribing to changes in the on-board network data storage space of the UE;
when the on-board network data storage space for the UE changes, transmitting a first notification to the first server; where the first notification is used to notify a first store-and-forward state of the UE, and the first store-and-forward state includes an on-board network data storage space used by the UE and/or a remaining on-board network data storage space of the UE.

The receiving first subscription information transmitted by the first server, includes:
receiving a first subscription request transmitted by the first server; where the first subscription request includes the first subscription information.

In a third aspect, one embodiment of the present disclosure provides a first server, including: a memory, a transceiver, and a processor; wherein the memory is used to store a program instruction; the transceiver is used to send and receive data under control of the processor; the processor is used to read the program instruction in the memory and perform the following operations:
determining a third on-board store-and-forward parameter according to one or more of a data service request, UE capability information, a first on-board store-and-forward parameter transmitted by a core network device and pre-configured second on-board store-and-forward parameter.

The operations further include:
transmitting the third on-board store-and-forward parameter to at least one of the UE, a second server and the core network device.

The operations further include:
receiving a first request transmitted by the UE; wherein the first request is used to request reporting or updating UE capability information, and the first request carries the UE capability information;
after the UE is authenticated, transmitting a first response to the UE, and storing or updating the UE capability information.

The UE capability information includes one or more of the following information:
identifier of a servicing satellite;
supported satellite access mode;
support on-board S&F mode;
on-board store-and-forward parameter.

The operations further include:
receiving a second request transmitted by the UE; wherein the second request is used to request to query an on-board store-and-forward parameter required by an application layer network;
wherein the transmitting the third on-board store-and-forward parameter to the UE, includes:
after the UE is authenticated, transmitting a second response to the UE; wherein the second response includes the third on-board store-and-forward parameter, and the third on-board store-and-forward parameter is an on-board store-and-forward parameter queried through the first server.

The on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

The operations further include:
receiving a data service request transmitted by the second server; wherein the data service request includes time for data transmission and a maximum data transfer volume within a preset time.

The operations further include:
receiving a data service change request transmitted by the second server; wherein the data service change request is used to request to update or delete an on-board store-and-forward parameter;
changing a locally stored on-board store-and-forward parameter based on the data service change request;
transmitting a changed on-board store-and-forward parameter to at least one of the UE, the second server and the core network device.

The operations further include:
transmitting first subscription information to the UE and transmitting second subscription information to the core network device, respectively; wherein the first subscription information is subscription information related to a store-and-forward state for the UE, and the second subscription information is subscription information related to a store-and-forward state for the UE and/or an on-board equipment;
receiving a first notification transmitted by the UE and a second notification transmitted by the core network device, respectively; wherein the first notification is used to notify a first store-and-forward state of the UE, and the second notification is used to notify a second store-and-forward state;
updating the on-board store-and-forward parameters of the UE and/or on-board equipment stored locally according to the first store-and-forward state and the second store-and-forward state;
according to the updated on-board store-and-forward parameter, determining on-board network maximum S&F data storage quota and on-board network maximum S&F data retention remaining available to the UE.

The operations further include:
transmitting a first subscription request to the UE; wherein the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

The operations further include:
transmitting a second subscription request to the core network device; wherein the second subscription request includes the second subscription information.

The operations further include:
when an amount of downlink data received from the second server exceeds the UE's remaining available on-board network maximum S&F data storage quota, performing one of the following:
transmitting a third notification for suspending transmission of downlink data to the second server; where the second notification includes the on-board network maximum S&F data retention and the reason for suspending transmission of data;
transmitting a fourth notification for rejecting transmission of the downlink data to the second server; where the fourth notification includes a reason for rejecting transmission of the data;
transmitting a first part of downlink data to the UE, and transmitting a fifth notification to the second server; where the data volume of the first part of downlink data is equal to the on-board network maximum S&F data storage quota remaining available to the UE, and the fifth notification is a notification for rejecting transmission of the remaining part of the downlink data, and the fifth notification includes the reason for rejecting transmission of the data.

The operations further include:
requesting the second server to increase the on-board network maximum S&F data storage quota for the UE;
when the second server allows increase of the on-board network maximum S&F data storage quota for the UE, requesting the UE and the core network device to update the on-board network maximum S&F data storage quota of the UE, respectively;
in a case where the UE and the core network device allow updating of the on-board network maximum S&F data storage quota of the UE, based on a third store-and-forward state, updating the on-board store-and-forward parameters of the UE and/or the on-board equipment stored locally; where the third store-and-forward state is obtained through the UE and the core network device, and the third store-and-forward state includes store-and-forward states of the UE and/or the on-board equipment;
transmitting a retransmission request for the downlink data to the second server;
receiving a retransmission response returned by the second server after the second server determines that the downlink data does not exceed the on-board network maximum S&F data retention.

The operations further include:
when determining, according to the on-board network maximum S&F data storage quota remaining available for the UE, that the on-board network data storage space used by the UE has reached an alarm threshold, determining a forwarding strategy for cached data, and transmitting a sixth notification to the core network device, where the sixth notification is used to notify that the on-board network data storage space used by the UE has reached the alarm threshold; wherein the forwarding strategy includes:
rejecting to forward newly added data in the cached data;
for first data other than the newly added data in the cached data, forwarding the first data according to pre-obtained forwarding priorities corresponding to the first data.

The forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

The operations further include:
receiving forwarding priorities corresponding to different data transmitted by the second server.

The operations further include:
when receiving newly added downlink data from the second server, rejecting to forward the newly added downlink data according to the forwarding strategy;
transmitting a seventh notification for rejecting transmission of the newly added downlink data to the second server; wherein the seventh notification includes a reason for rejecting transmission of the data.

In a fourth aspect, one embodiment of the present disclosure provides a device for implementing on-board store-and-forward function, including:
a first processing unit used to determine a third on-board store-and-forward parameter according to one or more of a data service request, UE capability information, a first on-board store-and-forward parameter transmitted by a core network device and pre-configured second on-board store-and-forward parameter.

In a fifth aspect, one embodiment of the present disclosure provides a user equipment (UE), including: a memory, a transceiver, and a processor; wherein the memory is used to store a program instruction; the transceiver is used to send and receive data under control of the processor; the processor is used to read the program instruction in the memory and perform the following operations:
receiving a third on-board store-and-forward parameter transmitted by a first server;
updating a target on-board store-and-forward parameter that match itself according to one or more of the third on-board store-and-forward parameter, the first on-board store-and-forward parameter transmitted by the core network device and the pre-configured fourth on-board store-and-forward parameter; and performing on-board store-and-forward processing based on the target on-board store-and-forward parameter.

The operations further include:
transmitting a first request to the first server; wherein the first request is used to request reporting or updating UE capability information, and the first request carries the UE capability information;
receiving a first response to the first request transmitted by the first server.

The UE capability information includes one or more of the following information:
identifier of a servicing satellite;
supported satellite access mode;
support on-board S&F mode;
on-board store-and-forward parameter.

The operations further include:
transmitting a second request to the first server; wherein the second request is used to request to query on-board store-and-forward parameters required by the application layer network;
wherein the receiving a first response to the first request transmitted by the first server, includes:
receiving a second response transmitted by the first server; wherein the second response includes the third on-board store-and-forward parameter, and the third on-board store-and-forward parameter is an on-board storage-and-forward parameter queried through the first server.

The on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

The operations further include:
if there is uplink data to be transmitted and there is no uplink satellite connection, caching the uplink data and starting a first timer;
when an uplink satellite connection is detected, if the first timer does not exceed the maximum S&F data retention and an amount of cached uplink data does not exceed the on-board network maximum S&F data storage quota, transmitting the cached uplink data to the first server; or,
when an uplink satellite connection is detected, if the first timer exceeds the on-board network maximum S&F data retention, and/or the cached uplink data exceeds the on-board network maximum S&F data storage quota, processing the cached uplink data according to a preset strategy.

The processing, by the processor, the cached uplink data according to a preset strategy, includes one or more of the following:
discarding the uplink data;
negotiating with the network whether to retransmit the uplink data;
transmitting the uplink data in segments, where each segment of uplink data is smaller than or equal to the on-board network maximum S&F data storage quota.

The operations further include:
receiving first subscription information transmitted by the first server; wherein the first subscription information is subscription information related to a store-and-forward state for the UE, and the first subscription information includes subscribing to changes in the on-board network data storage space of the UE;
when the on-board network data storage space for the UE changes, transmitting a first notification to the first server; where the first notification is used to notify a first store-and-forward state of the UE, and the first store-and-forward state includes an on-board network data storage space used by the UE and/or a remaining on-board network data storage space of the UE.

The operations further include:
receiving a first subscription request transmitted by the first server; where the first subscription request includes the first subscription information.

In a sixth aspect, one embodiment of the present disclosure provides a device for implementing an on-board store-and-forward function, including:
a first receiving unit used to receive a third on-board store-and-forward parameter transmitted by a first server;
a second processing unit used to update a target on-board store-and-forward parameter that match itself according to one or more of the third on-board store-and-forward parameter, the first on-board store-and-forward parameter transmitted by the core network device and the pre-configured fourth on-board store-and-forward parameter; and perform on-board store-and-forward processing based on the target on-board store-and-forward parameter.

In a seventh aspect, one embodiment of the present disclosure provides a processor-readable storage medium, including a computer program stored thereon; wherein the computer program is used to cause a processor to execute steps of the method for implementing on-board store-and-forward function according to the first aspect, or the computer program is used to cause the processor to execute steps of the method for implementing on-board store-and-forward function according to the second aspect.

The above technical solution of the present disclosure at least has the following beneficial effects.

In the above technical solution of the embodiments of the present disclosure, a third on-board store-and-forward parameter is determined according to one or more of a data service request, UE capability information, a first on-board store-and-forward parameter transmitted by a core network device and pre-configured second on-board store-and-forward parameter. Through the above processing, the device involved in the satellite communication service can obtain the on-board store-and-forward parameter, thereby assisting the network to implement the on-board communication service.

### BRIEF DESCRIPTION OF THE DRAWINGS

FIG. 1 is a schematic diagram of an application layer IoT architecture based on SEAL framework;
FIG. 2 is a schematic diagram of an enhanced application layer IoT service architecture;
FIG. 3 is a first flow chart of a method for implementing on-board store-and-forward function according to an embodiment of the present disclosure;
FIG. 4 is a schematic diagram of a specific implementation process of a first embodiment of the present disclosure;
FIG. 5 is a schematic diagram of a specific implementation process of a second embodiment of the present disclosure;
FIG. 6 is a schematic diagram of a specific implementation process of a third embodiment of the present disclosure;
FIG. 7 is a second flow chart of a method for implementing on-board store-and-forward function according to an embodiment of the present disclosure;
FIG. 8 is a schematic diagram of a specific implementation process of a fourth embodiment of the present disclosure;
FIG. 9 is a schematic diagram of a specific implementation process of a fifth embodiment of the present disclosure;
FIG. 10 is a block diagram of a server according to an embodiment of the present disclosure;
FIG. 11 is a first schematic diagram showing modules of a device for implementing on-board store-and-forward function according to an embodiment of the present disclosure;
FIG. 12 is a schematic diagram showing modules of a user equipment according to an embodiment of the present disclosure; and
FIG. 13 is a second schematic diagram showing modules of an apparatus for implementing satellite store-and-forward function according to an embodiment of the present disclosure.

### DETAILED DESCRIPTION

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

An introduction to the related technologies associated with the present disclosure is provided below.

The architecture and functional implementation of an application layer for an Internet of Things (IoT) service in 5th generation mobile communication technology (5G) are described as follows.

### 1) Application layer IoT architecture based on SEAL framework

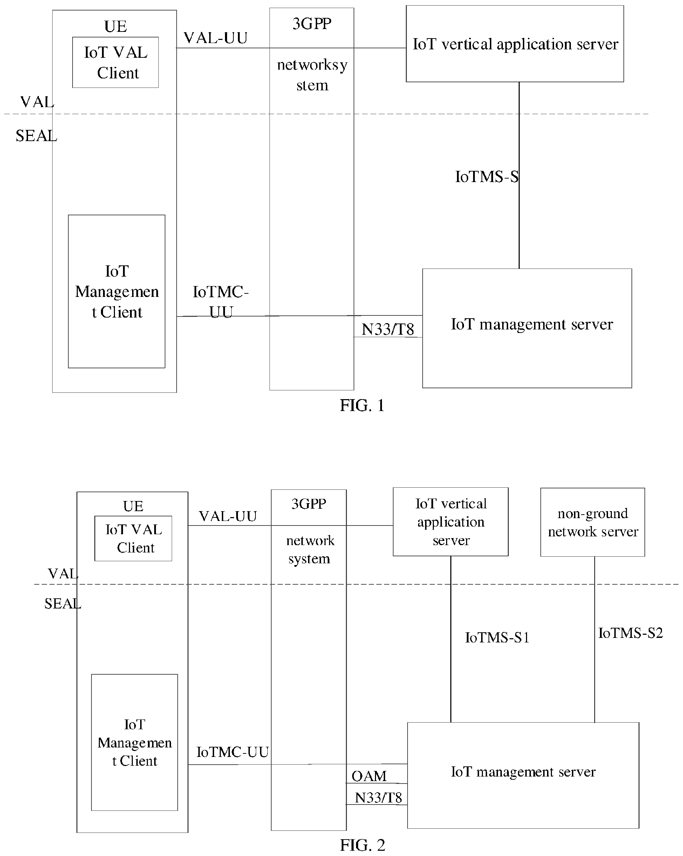

The application layer IoT service architecture in the related are is based on the SEAL framework, as shown in FIG. 1. After an IoT management server (IoTMS) obtains requirements for certain IoT devices from an IoT vertical application server (IoT VAL server), it transmits the requirements to an IoT management client (IoTMC) of UE, and interacts with the 3rd generation partnership project (3GPP) network through N33/T8 interface to collect network information of the corresponding IoT device. Then, information obtained from the user equipment (UE) and the 3GPP network is processed and reported to the IoT VAL server.

### 2) Enhanced application layer IoT service architecture

On basis of the SEAL-IoT service architecture platform in the related art, interaction between the IoT management server and a non-ground network server, also known as satellite control server, can be newly added, mainly used to obtain satellite-related information, etc. Meanwhile, an operation administration and maintenance (OAM) interface is newly added, so that the IoT management server can interact with the network management in the 3GPP system through the OAM interface to collect or transmit corresponding management information, thereby meeting needs of the IoT vertical industry. The main architecture is shown in FIG. 2.

### 3) Related application layer access technologies

The application enabler layer in related art, such as SEAL, EDGEAPP, and SEAL-based IoT management server, currently only supports 3GPP access, such as the 4th generation mobile communication technology (4G) long term evolution (LTE), 5G new radio (NR), etc., and does not yet support satellite access. However, the demand and scenarios for satellite access are very common, especially for services like IoT that are latency-insensitive.

### 4) On-board store-and-forward requirements

In remote areas, disaster areas, and other regions where it is difficult to deploy terrestrial base stations, mobile communication networks can provide UEs with communication services to access the terrestrial network through satellites. However, in actual deployment, due to limited number of gateway stations or site availability constraints, some areas (such as over oceans or in polar regions) are covered by the satellite network but lack a local gateway station to provide real-time connectivity to the terrestrial network.

For this case, when the UE does not have high requirements for data transmission delay, the mobile communication network can buffer the UE's uplink and downlink data in an on-board equipment, and forward it to the terrestrial network or UE when a satellite establishes an available link with a gateway station, thereby providing a non-real-time communication service between the UE and the application server, which can be called a communication service based on on-board storage-and-forward. However, this technical solution requires assistance of the application enabler layer, and how the application enabler layer assists the network in realizing on-board communication services is an urgent problem to be solved.

In order to solve the above technical problems, embodiments of the present disclosure provide a method and device for implementing on-board storage-and-forward function, equipment and medium. The method and the device are based on the same application concept. Since the principles of solving the problems by the method and the device are similar, implementation of the device and the method can refer to each other, and the repeated parts will not be repeated.

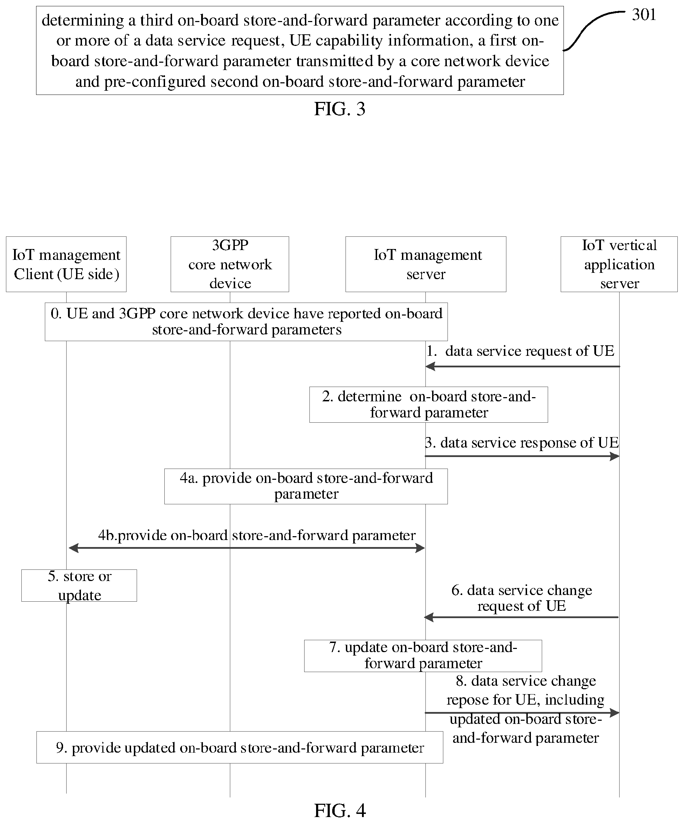

As shown in FIG. 3, which a flow chart of a method for implementing on-board store-and-forward function, applied to a first server such as an IoT management server, according to an embodiment of the present disclosure. The method may specifically include:
Step 301: determining a third on-board store-and-forward (S&F) parameter according to one or more of a data service request, UE capability information, a first on-board store-and-forward parameter transmitted by a core network device and pre-configured second on-board store-and-forward parameter.

The UE capability information includes one or more of the following information:
identifier of a servicing satellite;
supported satellite access mode;
support on-board S&F mode;
on-board store-and-forward parameter.

Specifically, each on-board store-and-forward parameter includes:
on-board network maximum store-and-forward (S&F) data storage quota for UEs and/or services;
on-board network maximum S&F data retention for UEs and/or services;
forwarding priority for UEs and/or services;
reception confirmation strategy for UEs and/or services.

In some embodiments, the method of the present disclosure may further include:
receiving a data service request transmitted by a second server; where the data service request includes time for data transmission and a maximum data transfer volume within a preset time.

Here, the second server may be an IoT vertical application server, which is a server corresponding to an IoT vertical application client on the UE side.

It is to be noted that the data service request is a data service request for certain IoT devices. The data service request may further include an IoT device identifier, device type, etc.

In one example, the first server comprehensively analyzes the data service request initiated by the second server (such as the IoT vertical application server) with the received on-board store-and-forward parameters on the UE side and the core network device side as well as on-board store-and-forward parameters configured by itself, and matches an optimal on-board store-and-forward parameter. It is to be understood that the optimal on-board store-and-forward parameter refers to an on-board store-and-forward parameter with the smallest parameter value selected from multiple on-board store-and-forward parameters. Here, the granularity of the on-board store-and-forward parameter can be UE or application.

That is, the third on-board store-and-forward parameter is the optimal on-board store-and-forward parameter determined based on one or more of the data service request, UE capability information, the first on-board store-and-forward parameter transmitted by the core network device and the pre-configured second on-board store-and-forward parameter.

Here, the first server transmits, to the second server, a data service response to the data service request. The data service response includes the third on-board store-and-forward parameter. Through the above processing, a device involved in the satellite communication service can obtain the on-board store-and-forward parameter, thereby assisting the network to realize the on-board communication service.

In some embodiments, the method of the present disclosure may further include:
transmitting the third on-board store-and-forward parameter to at least one of the UE, the second server and the core network device.

In some embodiments, the method of the present disclosure may further include:
1) receiving a data service change request transmitted by a second server; where the data service change request is used to request to update or delete an on-board store-and-forward parameter.

Here, the request to update or delete the on-board store-and-forward parameters may be a request to update or delete time for data transmission and a maximum data transfer volume within a preset time, and the like.

The data service change request may be a data service change request for certain IoT devices.

2) based on the data service change request, changing a locally stored on-board store-and-forward parameter.

Specifically, the first server changes the locally stored on-board store-and-forward parameter for certain IoT device accordingly according to the received data service change request.

3) transmitting a changed on-board store-and-forward parameter to at least one of the UE, the second server and the core network device.

Example 1: an IoT management server configures an on-board store-and-forward parameter according to a satellite application requirement, network capabilities, etc. and transmits it to UEs and 3GPP core network devices.

After obtaining an on-board store-and-forward parameter supported by the UE, if the IoT management server receives a data service request for the UE from an IoT vertical application server, the IoT management server can match information in the data service request with UE capabilities, and select an appropriate on-board store-and-forward parameter based on its own configuration, and transmits it to the UE and 3GPP core network device.

Referring to FIG. 4, one specific implementation process is as follows.

0. An IoT management client (UE side) and 3GPP core network device have transmitted, to an IoT management server, on-board store-and-forward parameters of the UE and on-board storage equipment. The on-board store-and-forward parameters include on-board store-and-forward capabilities and supported on-board store-and-forward parameters.

1. An IoT vertical application server (IoT VAL server) initiates a data service request for certain IoT devices to the IoT management server. The data service request includes an IoT device identifier, device type, data transmission time, maximum data transfer volume within a certain period of time, etc.

2. The IoT management server performs a comprehensive analysis of the data service request initiated by the IoT vertical application server, the received on-board store-and-forward parameters supported by the UE and core network device, and the on-board store-and-forward parameter configured by itself, to match an optimal on-board store-and-forward parameter.

The on-board store-and-forward parameter granularity may be UE or application.

3. The IoT management server transmits a data service response to the IoT vertical application server, where the data service response includes the optimal on-board store-and-forward parameter.

4a. The IoT management server transmits the optimal on-board store-and-forward parameter to the 3GPP core network device.

Here, 3GPP core network includes the 5th generation core network (5GC), 4G evolved packet core network (EPC), etc.

4b. The IoT management server transmits the optimal on-board store-and-forward parameter to the IoT management client.

5. The IoT management client stores or updates the on-board store-and-forward parameter transmitted by the IoT management server.

6. The IoT vertical application server initiates a data service change request for certain IoT device to the IoT management server, requesting to update or delete the time for data transmission, and a maximum data transfer volume within a certain period of time, etc.

7. According to the received data service change request, the IoT management server updates the on-board store-and-forward parameters for certain IoT device stored in itself.

8. The IoT management server transmits the updated on-board store-and-forward parameter to the IoT vertical application server.

9. The IoT management server transmits the updated on-board store-and-forward parameter to the IoT management client and 3GPP core network device respectively.

The above method step 301 involves the UE capability information, that is, the first server needs to obtain the UE capability information. The following is an optional implementation for obtaining the UE capability information.

In some embodiments, the method of the present disclosure may further include:
receiving a first request transmitted by the UE; where the first request is used to request reporting or updating UE capability information, and the first request carries the UE capability information;
after the UE is authenticated, transmitting a first response to the UE, and storing or updating the UE capability information.

This implementation illustrates that the UE supports reporting and updating of UE capabilities, and specifically supports reporting and updating of on-board store-and-forward capabilities.

The UE capability information includes one or more of the following information:
identifier of a servicing satellite;
supported satellite access mode;
support on-board S&F mode;
on-board store-and-forward parameter.

Here, the UE capability information may further include: an identifier of the UE (such as a generic public subscription identifier (GPSI) or a group ID) and a device type, etc.

Specifically, when the first request is used to request reporting of UE capability information, the first request may be a UE capability report request. When the first request is used to request updating of UE capability information, the first request may be a UE capability update request. The first request carries the UE capability information.

In some embodiments, the method of the present disclosure may further include:
receiving a second request transmitted by the UE; where the second request is used to request to query an on-board store-and-forward parameter required by an application layer network.

Correspondingly, the transmitting a third on-board store-and-forward parameter to the UE, includes:
after the UE is authenticated, transmitting a second response to the UE; where the second response includes the third on-board store-and-forward parameter, and the third on-board store-and-forward parameter is an on-board store-and-forward parameter queried through the first server.

This implementation shows that the UE can actively query the store-and-forward information required by the network and report it on demand.

In some embodiments, the method of the present disclosure may further include:
s1: transmitting first subscription information to the UE and transmitting second subscription information to the core network device, respectively; where the first subscription information is subscription information related to a store-and-forward state for the UE, and the second subscription information is subscription information related to a store-and-forward state for the UE and/or the on-board equipment.

Specifically, the transmitting the first subscription information to the UE may include:
transmitting a first subscription request to the UE; where the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

Here, the first subscription information may further include subscribing to a cache time change of the UE.

Specifically, the transmitting the second subscription information to the core network server may include:
transmitting a second subscription request to the core network device; where the second subscription request includes the second subscription information.

Here, the second subscription information includes subscribing to changes in storage space, cache time, etc. of the UE and/or on-board equipment.

s2: receiving a first notification transmitted by the UE and a second notification transmitted by the core network device, respectively; where the first notification is used to notify a first store-and-forward state of the UE, and the second notification is used to notify a second store-and-forward state.

Here, after receiving the first subscription information, the UE transmits a first notification to the first server when the on-board network data storage space of the UE changes. Similarly, after receiving the second subscription information, the core network device transmits a second notification to the first server when it monitors changes in the on-board network data storage space of the UE and/or on-board equipment or changes in the on-board network data cache time.

s3: updating the on-board store-and-forward parameters of the UE and/or on-board equipment stored locally according to the first store-and-forward state and the second store-and-forward state.

s4: according to the updated on-board store-and-forward parameter, determining on-board network maximum S&F data storage quota and on-board network maximum S&F data retention remaining available to the UE.

Further, in an optional embodiment, the method of the embodiment of the present disclosure may further include:

in order to avoid the problem of on-board cache failure when the amount of downlink data received from the second server exceeds the UE's remaining available on-board network maximum S&F data storage quota, performing one of the following:
1. transmitting a third notification for suspending transmission of downlink data to the second server; where the second notification includes the on-board network maximum S&F data retention and the reason for suspending transmission of data.
   Specifically, the reason for suspending transmission of data is that the downlink data exceeds the on-board network maximum S&F data storage quota remaining available to the UE.
2. transmitting a fourth notification for rejecting transmission of the downlink data to the second server; where the fourth notification includes a reason for rejecting transmission of the data.
   Here, the reason for rejecting transmission of the data is that the downlink data exceeds the on-board network maximum S&F data storage quota remaining available to the UE.
3. transmitting a first part of downlink data to the UE, and transmitting a fifth notification to the second server; where the data volume of the first part of downlink data is equal to the on-board network maximum S&F data storage quota remaining available to the UE, and the fifth notification is a notification for rejecting transmission of the remaining part of the downlink data, and the fifth notification includes the reason for rejecting transmission of the data.

This processing method is based on the on-board network maximum S&F data storage quota remaining available to the UE, transmits a part of the downlink data and rejects transmission of a part of the downlink data. Here, the reason for rejecting transmission of data is that the downlink data exceeds the on-board network maximum S&F data storage quota remaining available to the UE.

After transmitting the third notification for suspending transmission of the downlink data to the second server, the method of the embodiment of the present disclosure may further include:
requesting the second server to increase the on-board network maximum S&F data storage quota for the UE;
when the second server allows increase of the on-board network maximum S&F data storage quota for the UE, requesting the UE and the core network device to update the on-board network maximum S&F data storage quota of the UE, respectively;
in a case where the UE and the core network device allow updating of the on-board network maximum S&F data storage quota of the UE, based on a third store-and-forward state, updating the on-board store-and-forward parameters of the UE and/or the on-board equipment stored locally; where the third store-and-forward state is obtained through the UE and the core network device, and the third store-and-forward state includes store-and-forward states of the UE and/or the on-board equipment;
transmitting a retransmission request for the downlink data to the second server;
receiving a retransmission response returned by the second server after the second server determines that the downlink data does not exceed the on-board network maximum S&F data retention.

In this scenario, by adjusting the on-board store-and-forward parameters, such as adjusting the on-board store-and-forward parameters, the IoT application requirements can be better adapted.

Example 2: an IoT management server regularly collects storage information of UEs and network and dynamically adjusts storage parameters.

The IoT management server can initiate a subscription request for a store-and-forward state of the UE to the IoT management client, and initiate a subscription request for store-and-forward states of the UE and a satellite to the 3GPP core network device, subscribe to changes in on-board network data storage spaces of the UE and satellite, changes in the on-board network data cache time, etc. The downlink data request initiated by the IoT vertical application server is adjusted according to the latest storage information, and the store-and-forward parameters for the network and UE are adaptively adjusted according to the downlink data request, so as to better adapt to requirements of IoT applications.

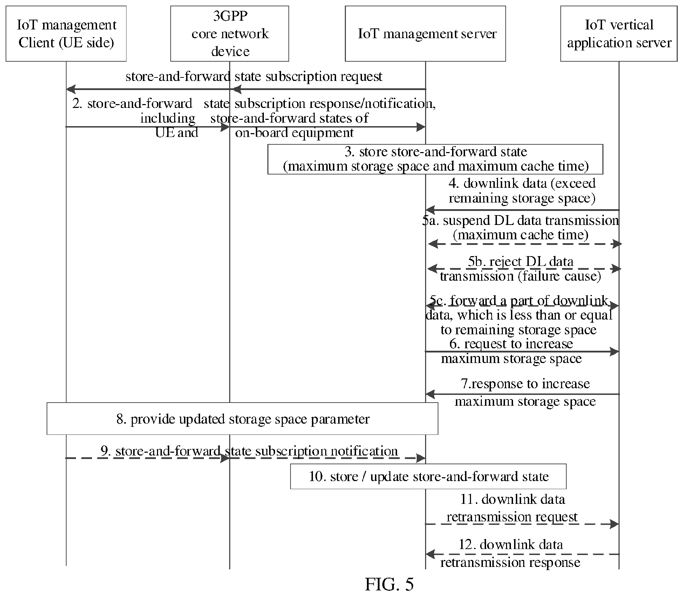

Referring to FIG. 5, one specific implementation process is as follows.
1. An IoT management server initiates a store-and-forward state subscription request for the UE to an IoT management client, and initiates a store-and-forward state subscription request for certain UE and on-board equipment to the 3GPP core network device, subscribing to changes in the on-board network data storage space and on-board network data cache time of the UE and on-board equipment.
2. The IoT management client and 3GPP core network device respond to the subscription request of the IoT management server, and report the store-and-forward states of the UE and on-board equipment to the IoT management server when subscription trigger conditions are met.

For example: UE1-Satellite1-storage device: UPF1-on-board network maximum S&F data storage quota: 5G-currently 2G is occupied.

UE1-Satellitel-Storage device: UPF1-on-board network data maximum S&F data retention: 1h.

Here, UPF refers to user plane function.

3. The IoT management server stores and updates the store-and-forward parameters of the UE and on-board equipment stored in itself, and estimates that the on-board network maximum S&F data storage quota currently available to the UE is 3G.

4. The IoT vertical application server initiates a downlink data transmission request to the IoT management server, but the amount of data to-be-transmitted is 4G.

Since the amount of downlink data initiated by the IoT vertical application server exceeds the on-board network maximum S&F data storage quota currently available to the UE, in order to avoid the problem of on-board cache failure, the following 5a, 5b or 5c are performed.

5a. The IoT management server transmits a suspend transmission notification (e.g., "pending DL data") to the IoT vertical application server, requesting to suspend transmission of downlink data, and the suspend transmission notification carries the on-board network maximum S&F data retention and the reason for suspension (the data exceeds the on-board network maximum S&F data storage quota remaining available to the UE).

5b. The IoT management server directly rejects the downlink data initiated by the IoT vertical application server, and the reason for the rejection is that the data exceeds the on-board network maximum S&F data storage quota available to the UE.

5c. The IoT management server directly forwards the 3G downlink data, rejects forwarding the remaining 1G data, and replies to the IoT vertical application server that the reason for the rejection is that the data exceeds the on-board network maximum S&F data storage quota available to the UE.

Note: if the IoT management server chooses to execute 5b or 5c, steps 6 to 11 can be skipped.

6. The IoT management server requests the IoT vertical application server to increase the on-board network maximum S&F data storage quota for the UE (e.g., from 5G to 6G).

7. The IoT vertical application server determines whether it is allowed based on the service request, and if allowed, it sends a response to the IoT management server.

8. The IoT management server initiates an update of the on-board network maximum S&F data storage quota parameter for the UE to the IoT management client and the 3GPP core network device; the IoT management client and the 3GPP core network device performs judgment based on their own configuration and other policies; and if allowed, they reply to the IoT management server. If not allowed, they reply to the IoT management server with a rejection.

Note: if the IoT management client or 3GPP core network device does not allow changing the on-board network maximum S&F data storage quota, steps 9 to 12 can be skipped.

9. After the store-and-forward parameters are changed, the IoT management client and 3GPP core network device initiate a subscription notification to the IoT management server, carrying the changed store-and-forward states of the UE and on-board equipment.

For example, UE1-Satellite1-storage device: AMF1-on-board network maximum S&F data storage quota: 6G-currently 2G is occupied.

UE1-Satellite1-storage device: AMF1-on-board network maximum S&F data retention of: 1h.

10. The IoT management server stores and updates the store-and-forward parameters of the UE and on-board equipment stored in itself, and estimates that The on-board network maximum S&F data storage quota currently available to the UE is 4G.

11. The IoT management server initiates a retransmission request for downlink data to the IoT vertical application server.

12. The IoT vertical application server determines whether the downlink data is still within the on-board network maximum S&F data retention. If it has not expired, it responds to the retransmission request of the IoT management server.

Further, in some embodiments, the method of the present disclosure may include:
when it is determined, according to the on-board network maximum S&F data storage quota remaining available for the UE, that the on-board network data storage space used by the UE has reached an alarm threshold, determining a forwarding strategy for cached data, and transmitting a sixth notification to the core network device, where the sixth notification is used to notify that the on-board network data storage space used by the UE has reached the alarm threshold. The forwarding strategy includes:
rejecting to forward newly added data in the cached data;
for first data other than the newly added data in the cached data, forwarding the first data according to pre-obtained forwarding priorities corresponding to the first data.

Further, the method of the embodiment of the present disclosure may further include:
when receiving newly added downlink data from the second server, rejecting to forward the newly added downlink data according to the forwarding strategy;
transmitting a seventh notification for rejecting transmission of the newly added downlink data to the second server; where the seventh notification includes a reason for rejecting transmission of the data.

It is to be noted that the forwarding priority can be obtained in the following ways.

In some embodiments, the method of the present disclosure further includes:
receiving forwarding priorities corresponding to different data transmitted by the second server.

Specifically, the forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

In this scenario, the data forwarding strategy is adjusted to better adapt to the needs of the Internet of Things application.

Example 3: the IoT management server regularly collects storage information of UEs and network and dynamically adjusts the data forwarding strategy.

The IoT management server can initiate a subscription request for a store-and-forward state of the UE to the IoT management client, and initiate a subscription request for store-and-forward states of the UE and satellite to the 3GPP core network device, subscribe to changes in on-board network data storage spaces of the UE and satellite, and changes in the on-board network data cache time, etc. The data forwarding strategy is adjusted according to the latest storage information to better adapt to the needs of the Internet of Things application.

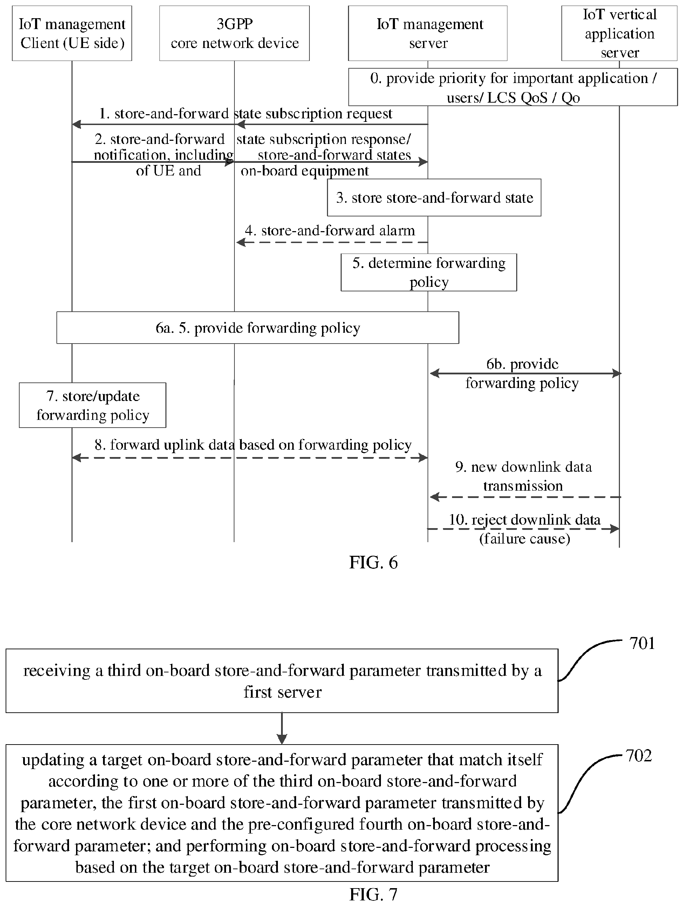

Referring to FIG. 6, one specific implementation process is as follows.

0. The IoT vertical application server has transmitted priorities of emergency services, important services, important users, quality of service (QoS) of location services (LCS), quality of experience (QoE) of services, etc. to the IoT management server.

1. The IoT management server initiates a subscription request for a store-and-forward state of the UE to the IoT management client, and initiates a subscription request for store-and-forward states of certain UE and on-board equipment to the 3GPP core network device, subscribe to changes in on-board network data storage spaces of the UE and on-board equipment, and changes in the on-board network data cache time, etc.

2. The IoT management client and 3GPP core network device respond to the subscription request of the IoT management server, and reports the store-and-forward states of the UE and on-board equipment to the IoT management server when the subscription trigger conditions are met.

For example, UE1-Satellite1-storage device: UPF1-on-board network maximum S&F data storage quota: 5G-currently 2G is occupied.

UE1-Satellitel-Storage device: UPF1-on-board network maximum S&F data retention: 1h.

3. The IoT management server stores and updates the store-and-forward parameters of the UE and on-board equipment stored in itself, and calculates that the on-board network maximum S&F data storage quota currently available to the UE is 1G and reaches an alarm threshold (for example, the used on-board network data storage space occupies 80% of the on-board network maximum S&F data storage quota).

4. The IoT management server can report the alarm that the on-board network data storage space has reached the threshold, to a network management system in the 3GPP core network through IoTMS-OAM interface.

Since the on-board network data storage space has reached the alarm threshold, in order to avoid data congestion, step 5 is performed.

5. The IoT management server adjusts the forwarding strategy for cached data.

The forwarding strategy includes but are not limited to the following:
rejecting to forward newly added uplink and downlink data;
forwarding existing uplink and downlink buffer data according to the following forwarding priorities:
   a) prioritize forwarding emergency services (e.g., emergency calls 110, 119, 120...)
   b) prioritize forwarding important services (s e.g., service: alarm, priority: 1, ...)
   c) prioritize forwarding for important users (e.g., user: VIP, priority: 1, ...)
   d) prioritize forwarding for LCS with high QoS requirements (e.g., LCS QoS latency: xx, accuracy: xx; ...)
   e) prioritize forwarding of services with high QoE requirements (e.g., service QoE: xx, priority: 1, ...)

6a. The IoT management server transmits the latest data forwarding strategy to the IoT management client and 3GPP core network device.

6b. The IoT management server forwards the latest data forwarding policy to the IoT VAL server.

7. The IoT management client determines an appropriate forwarding strategy and stores or updates it, based on the latest forwarding strategy issued by the IoT management server, its own configuration, and ae forwarding strategy issued by the 3GPP CN network (if any).

8. The IoT management client forwards uplink data according to the forwarding strategy selected in the step 7, for example, rejecting to transmit the newly added uplink data.

9. The IoT vertical application server transmits data according to the latest data forwarding strategy, such as caching new downlink data. If the cache time expires, the IoT vertical application server may transmit new downlink data to the IoT management server.

10. The IoT management server rejects to forward new downlink data according to the latest data forwarding strategy, and transmits, to the IoT vertical application server, a rejection reason that the on-board network data storage space has reached the threshold.

In the method for implementing on-board store-and-forward function of the embodiment of the present disclosure, a third on-board store-and-forward parameter is determined according to one or more of a data service request, UE capability information, a first on-board store-and-forward parameter transmitted by a core network device and pre-configured second on-board store-and-forward parameter. Through the above processing, the device involved in the satellite communication service can obtain the on-board store-and-forward parameter, thereby assisting the network to implement the on-board communication service.

As shown in FIG. 7, which is a flow chart of a method for implementing on-board store-and-forward function, applied to a user equipment, according to an embodiment of the present disclosure. Specifically, the method may include:
Step 701: receiving a third on-board store-and-forward parameter transmitted by a first server.

The third on-board store-and-forward parameter is determined by a first server according to one or more of a data service request, UE capability information, a first on-board store-and-forward parameter transmitted by a core network device and pre-configured second on-board store-and-forward parameter.

Step 702: updating a target on-board store-and-forward parameter that match itself according to one or more of the third on-board store-and-forward parameter, the first on-board store-and-forward parameter transmitted by the core network device and the pre-configured fourth on-board store-and-forward parameter; and performing on-board store-and-forward processing based on the target on-board store-and-forward parameter.

In some embodiments, each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

In one example, the UE comprehensively analyzes one or more combinations of the received on-board store-and-forward parameters from the first server and the core network device side and on-board store-and-forward parameters configured by itself, and matches an optimal on-board store-and-forward parameter. How to select the optimal on-board store-and-forward parameter depends on implementation of the UE.

In some embodiments, the method of the present disclosure further includes:
transmitting a first request to the first server; where the first request is used to request reporting or updating UE capability information, and the first request carries the UE capability information;
receiving a first response to the first request transmitted by the first server.

In some embodiments, the UE capability information includes one or more of the following information:
identifier of a servicing satellite;
supported satellite access mode;
support on-board S&F mode;
on-board store-and-forward parameter.

This implementation illustrates that the UE supports reporting and updating of UE capabilities, and specifically supports reporting and updating of on-board store-and-forward capabilities.

Here, the UE capability information may further include: an identifier of the UE (such as GPSI or group ID) and a device type, etc.

Specifically, when the first request is used to request reporting of UE capability information, the first request may be a UE capability report request. When the first request is used to request updating of UE capability information, the first request may be a UE capability update request. The first request carries the UE capability information.

Embodiment 4: UE supports reporting and updating of on-board store-and-forward capability.

After a UE that supports satellite access registers with the 5GC/EPC network, an internal IoT management client needs to report, to an application layer IoT management server, UE capability information which includes UE ID, device type, on-board store-and-forward parameters, etc.

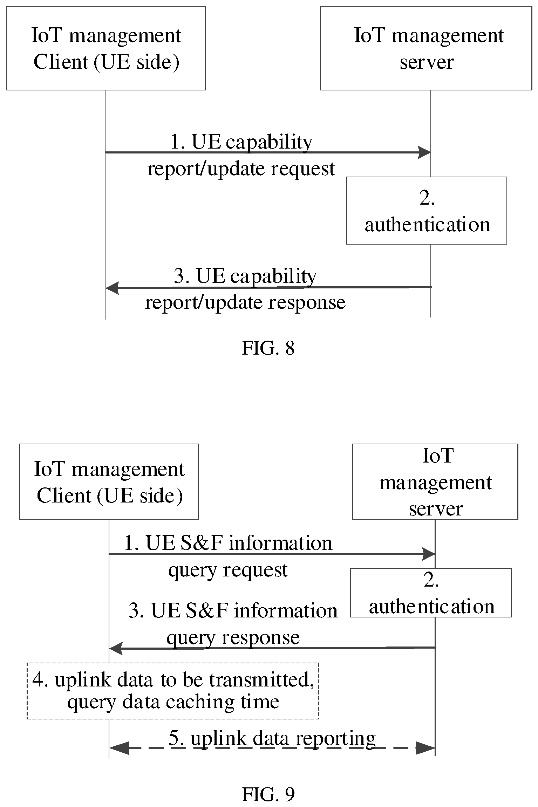

Referring to FIG. 8, one specific implementation process is as follows.
1. An IoT management client transmits a UE capability report/update request to an IoT management server to report or update the terminal's capabilities;
   Here, in addition to carrying the UE identifier (such as GPSI or group ID), UE type, identifier of a serving satellite, and supported satellite access mode, the request further needs to report supported capabilities, including store-and-forward capabilities and store-and-forward parameters (such as an on-board network maximum S&F data storage quota and an on-board network data cache time, etc.).
2. After receiving the UE capability information reported by the IoT management client, the IoT management server authenticates the UE based on the stored information.
3. If the authentication is successful, the IoT management server accepts the request from the IoT management client and transmits a response, while storing or updating the UE capability information.

In some embodiments, the method of the present disclosure may further include:
transmitting a second request to the first server; where the second request is used to request to query on-board store-and-forward parameters required by the application layer network.

Accordingly, the above step 701 may include:
receiving a second response transmitted by the first server; where the second response includes the third on-board store-and-forward parameter, and the third on-board store-and-forward parameter is an on-board storage-and-forward parameter queried through the first server.

This implementation shows that the UE can actively query the store-and-forward information required by the network and report it on demand.

Further, in the above step 702, based on the target on-board store-and-forward parameter, performing on-board store-and-forward processing includes:
if there is uplink data to be transmitted and there is no uplink satellite connection, caching the uplink data and starting a first timer;
when an uplink satellite connection is detected, if the first timer does not exceed the maximum S&F data retention and an amount of cached uplink data does not exceed the on-board network maximum S&F data storage quota, transmitting the cached uplink data to the first server; or,
when an uplink satellite connection is detected, if the first timer exceeds the on-board network maximum S&F data retention, and/or the cached uplink data exceeds the on-board network maximum S&F data storage quota, processing the cached uplink data according to a preset strategy.

Specifically, the processing the cached uplink data according to a preset strategy includes one or more of the following:
discarding the uplink data;
negotiating with the network whether to retransmit the uplink data;
transmitting the uplink data in segments, where each segment of uplink data is smaller than or equal to the on-board network maximum S&F data storage quota.

Embodiment 5: UE actively queries the store-and-forward information required by the network and reports it on demand.

After the IoT device is connected to the satellite network, if it supports on-board store-and-forward capabilities, in case that it has not configured any store-and-forward parameter and has not received any store-and-forward parameter issued by the network, it can actively query its information from an application layer IoT management server.

Referring to FIG. 9, one specific implementation process is as follows.
1) If the UE supports the on-board store-and-forward capability, but has not configured any store-and-forward parameters and has not received any store-and-forward parameters issued by the network, the IoT management client transmits a UE S&F (Store&Forward) information query request to the IoT management server to actively query the on-board store-and-forward parameters required by the network, where the request carries UE identifier (such as GPSI or group ID), UE type, satellite identifier, requested event (on-board store-and-forward parameters), etc.

The on-board store-and-forward parameter includes but are not limited to:
on-board network maximum S&F data storage quota (uplink and downlink) for UEs and/or services;
on-board network maximum S&F data retention (uplink and downlink) for UEs and/or services;
forwarding priority for UEs and/or services;
reception confirmation strategy for UEs and/or services.

Here, the reception confirmation strategy for the service should be understood as providing relevant reception confirmation modes for different service data.

2) After receiving the information requested by the IoT management client, the IoT management server authenticates the UE based on the stored information.

3) If the authentication is successful, the IoT management server accepts the request of the IoT management client and transmits a response message (UE S&F information query response) to the IoT management client, where the response message includes on-board store-and-forward parameters.

4) The IoT management client receives the on-board store-and-forward parameters and determines its own internal store-and-forward parameters according to one or more combinations of the following:
pre-configured store-and-forward parameter;
on-board store-and-forward parameter issued by 3GPP core network device;
on-board store-and-forward parameter transmitted by the IoT management server;
How to select an appropriate parameter depends on the implementation of the UE.

If there is uplink data to be transmitted, the IoT management client caches the uplink data when it finds that there is no uplink satellite connection or when if it is known that the UE has activated on-board storage. Meanwhile, a data cache timer is started according to the stored data cache time.

It is to be noted that when it is known that the UE has activated on-board storage, it indicates that there is no connection or the connection between the gateway station and the satellite is interrupted.

5) When the IoT management client detects that the satellite connection is restored, if the data cache time does expire and the transmitted data does not exceed the stored data cache space, the cached uplink data is transmitted to the IoT management server.

If the transmission time has expired or the data exceeds the stored data cache space, the UE's policy is followed.

The UE's policy includes but is not limited to one or more of the following:
directly discard;
negotiate with the network whether retransmission is needed;
transmission in segments (each segment does not exceed the maximum cache space for storage)

In some embodiments, the method of the present disclosure may further include:

1. receiving first subscription information transmitted by the first server; where the first subscription information is subscription information related to a store-and-forward state for the UE, and the first subscription information includes subscribing to changes in the on-board network data storage space of the UE.

Specifically, a first subscription request transmitted by the first server is received, where the first subscription request includes the first subscription information.

2. when the on-board network data storage space for the UE changes, transmitting a first notification to the first server; where the first notification is used to notify a first store-and-forward state of the UE, and the first store-and-forward state includes an on-board network data storage space used by the UE and/or a remaining on-board network data storage space of the UE.

Here, the first subscription information may further include subscribing to a change in the on-board network data cache time of the UE.

In this implementation, by subscribing to the UE's store-and-forward information, it allows the first server to subsequently adjust the store-and-forward parameters or policies to meet the demands of the on-board communication service.

In the method for implementing on-board store-and-forward function of the embodiment of the present disclosure, by receiving a third on-board store-and-forward parameter transmitted by a first server, updating a target on-board store-and-forward parameter that matches itself according to one or more of the third on-board store-and-forward parameter, the first on-board store-and-forward parameter transmitted by a core network device and a preconfigured fourth on-board store-and-forward parameter, and performing on-board store-and-forward processing based on the target on-board store-and-forward parameter, the obtained on-board store-and-forward parameter can assist the network in implementing on-board communication services.

It is to be noted that the method of the embodiment of the present disclosure is applicable to any application enabler layer that requires the use of on-board store-and-forward capabilities, and is mainly applicable to latency-insensitive services, so IoT services are preferred. In addition, the method of the embodiment of the present disclosure is also applicable to other vertical industry applications that require satellite access. In the scenario where satellite access is required, the method of the embodiment of the present disclosure solves the problem that due to limited number of gateway stations or site availability constraints, some areas (such as over oceans or in polar regions) are covered by the satellite stations but lack a local gateway station to provide real-time connectivity to the terrestrial network. Meanwhile, it expands the use scenarios of satellites and enhances the possibility of landing satellite applications.

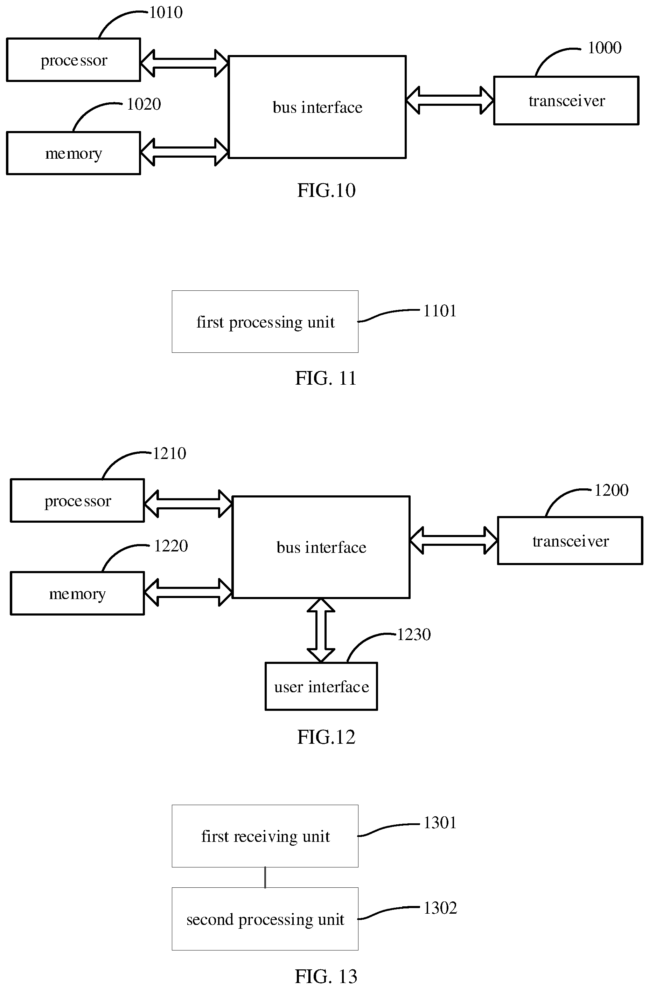

As shown in FIG. 10, one embodiment of the present disclosure further provides a server, which is a first server and includes: a memory 1020, a transceiver 1000, and a processor 1010. The memory 1020 is used to store a computer program. The transceiver 1000 is used to send and receive data under the control of the processor 1010. The processor 1010 is used to read the computer program in the memory 1020 and perform the following operations:

determining a third on-board store-and-forward parameter according to one or more of a data service request, UE capability information, a first on-board store-and-forward parameter transmitted by a core network device and pre-configured second on-board store-and-forward parameter.

In FIG. 10, a bus architecture may include any number of interconnected bus and bridge. Specifically, various circuits of one or more processors, which are represented by the processor 1010, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1000 may be multiple elements, including a transmitter and a receiver and provide units, which communicate with other devices on the transmission medium. The transmission medium includes radio channels, wired channels, optical cables, etc. The processor 1010 is responsible for managing the bus architecture and the normal processing. The memory 1020 may be used to store data used by the processor 1010 for performing operations.

The processor 1010 may be a central processing unit (CPU), an application specific integrated circuit (ASIC), a field-programmable gate array (FPGA) or a complex programmable logic device (CPLD). The processor may also adopt multi-core architecture.

In some embodiments, the operations further include:
transmitting the third on-board store-and-forward parameter to at least one of the UE, the second server and the core network device.

In some embodiments, the operations further include:
receiving a first request transmitted by the UE; where the first request is used to request reporting or updating UE capability information, and the first request carries the UE capability information;
after the UE is authenticated, transmitting a first response to the UE, and storing the UE capability information through the memory 1020 or updating the UE capability information through the processor.

In some embodiments, the UE capability information includes one or more of the following information:
identifier of a servicing satellite;
supported satellite access mode;
support on-board S&F mode;
on-board store-and-forward parameter.

In some embodiments, the operations further include:
receiving a second request transmitted by the UE; where the second request is used to request to query an on-board store-and-forward parameter required by an application layer network;
after the UE is authenticated, transmitting a second response to the UE; where the second response includes the third on-board store-and-forward parameter, and the third on-board store-and-forward parameter is an on-board store-and-forward parameter queried through the first server.

In some embodiments, each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

In some embodiments, the operations further include:
receiving a data service request transmitted by a second server; where the data service request includes time for data transmission and a maximum data transfer volume within a preset time.

In some embodiments, the operations further include:
receiving a data service change request transmitted by a second server; where the data service change request is used to request to update or delete an on-board store-and-forward parameter;
based on the data service change request, changing a locally stored on-board store-and-forward parameter;
transmitting a changed on-board store-and-forward parameter to at least one of the UE, the second server and the core network device, respectively.

In some embodiments, the operations further include:
transmitting first subscription information to the UE and transmitting second subscription information to the core network device, respectively; where the first subscription information is subscription information related to a store-and-forward state for the UE, and the second subscription information is subscription information related to a store-and-forward state for the UE and/or the on-board equipment;
receiving a first notification transmitted by the UE and a second notification transmitted by the core network device, respectively; where the first notification is used to notify a first store-and-forward state of the UE, and the second notification is used to notify a second store-and-forward state;
updating the on-board store-and-forward parameters of the UE and/or on-board equipment stored locally according to the first store-and-forward state and the second store-and-forward state;
according to the updated on-board store-and-forward parameter, determining on-board network maximum S&F data storage quota and on-board network maximum S&F data retention remaining available to the UE.

In some embodiments, the operations further include:
transmitting a first subscription request to the UE; where the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

In some embodiments, the operations further include:
transmitting a second subscription request to the core network device; where the second subscription request includes the second subscription information.

In some embodiments, the operations further include:
when the amount of downlink data received from the second server exceeds the UE's remaining available on-board network maximum S&F data storage quota, performing one of the following:
transmitting a third notification for suspending transmission of downlink data to the second server; where the second notification includes the on-board network maximum S&F data retention and the reason for suspending transmission of data;
transmitting a fourth notification for rejecting transmission of the downlink data to the second server; where the fourth notification includes a reason for rejecting transmission of the data;
transmitting a first part of downlink data to the UE, and transmitting a fifth notification to the second server; where the data volume of the first part of downlink data is equal to the on-board network maximum S&F data storage quota remaining available to the UE, and the fifth notification is a notification for rejecting transmission of the remaining part of the downlink data, and the fifth notification includes the reason for rejecting transmission of the data.

In some embodiments, the operations further include:
requesting the second server to increase the on-board network maximum S&F data storage quota for the UE;
when the second server allows increase of the on-board network maximum S&F data storage quota for the UE, requesting the UE and the core network device to update the on-board network maximum S&F data storage quota of the UE, respectively;
in a case where the UE and the core network device allow updating of the on-board network maximum S&F data storage quota of the UE, based on a third store-and-forward state, updating the on-board store-and-forward parameters of the UE and/or the on-board equipment stored locally; where the third store-and-forward state is obtained through the UE and the core network device, and the third store-and-forward state includes store-and-forward states of the UE and/or the on-board equipment;
transmitting a retransmission request for the downlink data to the second server;
receiving a retransmission response returned by the second server after the second server determines that the downlink data does not exceed the on-board network maximum S&F data retention.

In some embodiments, the operations further include:
when it is determined, according to the on-board network maximum S&F data storage quota remaining available for the UE, that the on-board network data storage space used by the UE has reached an alarm threshold, determining a forwarding strategy for cached data, and transmitting a sixth notification to the core network device, where the sixth notification is used to notify that the on-board network data storage space used by the UE has reached the alarm threshold. The forwarding strategy includes:
rejecting to forward newly added data in the cached data;
for first data other than the newly added data in the cached data, forwarding the first data according to pre-obtained forwarding priorities corresponding to the first data.

In some embodiments, the forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

In some embodiments, the operations further include:
receiving forwarding priorities corresponding to different data transmitted by the second server.

In some embodiments, the operations further include:
when receiving newly added downlink data from the second server, rejecting to forward the newly added downlink data according to the forwarding strategy;
transmitting a seventh notification for rejecting transmission of the newly added downlink data to the second server; where the seventh notification includes a reason for rejecting transmission of the data.

The server of the embodiment of the present disclosure determines a third on-board store-and-forward parameter according to one or more of a data service request, UE capability information, a first on-board store-and-forward parameter transmitted by a core network device and pre-configured second on-board store-and-forward parameter. Through the above processing, the device involved in the satellite communication service can obtain the on-board store-and-forward parameter, thereby assisting the network to implement the on-board communication service.

As shown in FIG. 11, the present disclosure also provides a device for implementing on-board store-and-forward function, including:
a first processing unit 1101 used to determine a third on-board store-and-forward parameter according to one or more of a data service request, UE capability information, a first on-board store-and-forward parameter transmitted by a core network device and pre-configured second on-board store-and-forward parameter.

In some embodiments, the device of the present disclosure further includes:
a first transmission unit used to transmit the third on-board store-and-forward parameter to at least one of the UE, the second server and the core network device.

In some embodiments, the device of the present disclosure further includes:
a second receiving unit used to receive a first request transmitted by the UE; where the first request is used to request reporting or updating UE capability information, and the first request carries the UE capability information;
a second transmission unit used to, after the UE is authenticated, transmit a first response to the UE, and storing or updating the UE capability information.

In some embodiments, the UE capability information includes one or more of the following information:
identifier of a servicing satellite;
supported satellite access mode;
support on-board S&F mode;
on-board store-and-forward parameter.

In some embodiments, the device of the present disclosure further includes:
a third receiving unit used to receive a second request transmitted by the UE; where the second request is used to request to query an on-board store-and-forward parameter required by an application layer network.

The first transmission unit 1103 is specifically used to:
after the UE is authenticated, transmit a second response to the UE; where the second response includes the third on-board store-and-forward parameter, and the third on-board store-and-forward parameter is an on-board store-and-forward parameter queried through the first server.

In some embodiments, each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

In some embodiments, the device of the present disclosure further includes:
a fourth receiving unit used to receive a data service request transmitted by a second server; where the data service request includes time for data transmission and a maximum data transfer volume within a preset time.

In some embodiments, the device of the present disclosure further includes:
a fifth receiving unit used to receive a data service change request transmitted by a second server; where the data service change request is used to request to update or delete an on-board store-and-forward parameter;
a third processing unit used to, based on the data service change request, change a locally stored on-board store-and-forward parameter;
a third transmission unit used to transmit a changed on-board store-and-forward parameter to at least one of the UE, the second server and the core network device, respectively.

In some embodiments, the device of the present disclosure further includes:
a fourth transmission unit used to transmit first subscription information to the UE and transmit second subscription information to the core network device, respectively; where the first subscription information is subscription information related to a store-and-forward state for the UE, and the second subscription information is subscription information related to a store-and-forward state for the UE and/or the on-board equipment;
a sixth receiving unit used to receive a first notification transmitted by the UE and a second notification transmitted by the core network device, respectively; where the first notification is used to notify a first store-and-forward state of the UE, and the second notification is used to notify a second store-and-forward state;
a fourth processing unit used to update the on-board store-and-forward parameters of the UE and/or on-board equipment stored locally according to the first store-and-forward state and the second store-and-forward state;
a fifth processing unit used to, according to the updated on-board store-and-forward parameter, determine on-board network maximum S&F data storage quota and on-board network maximum S&F data retention remaining available to the UE.

In some embodiments, the fourth transmission unit is specifically used to:
transmit a first subscription request to the UE; where the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

In some embodiments, the fourth transmission unit is specifically used to:
transmit a second subscription request to the core network device; where the second subscription request includes the second subscription information.

In some embodiments, the device of the present disclosure further includes:
a fifth transmission unit used to, when the amount of downlink data received from the second server exceeds the UE's remaining available on-board network maximum S&F data storage quota, perform one of the following:
transmitting a third notification for suspending transmission of downlink data to the second server; where the second notification includes the on-board network maximum S&F data retention and the reason for suspending transmission of data;
transmitting a fourth notification for rejecting transmission of the downlink data to the second server; where the fourth notification includes a reason for rejecting transmission of the data;
transmitting a first part of downlink data to the UE, and transmitting a fifth notification to the second server; where the data volume of the first part of downlink data is equal to the on-board network maximum S&F data storage quota remaining available to the UE, and the fifth notification is a notification for rejecting transmission of the remaining part of the downlink data, and the fifth notification includes the reason for rejecting transmission of the data.

In some embodiments, the device of the present disclosure further includes:
a first requesting unit used to request the second server to increase the on-board network maximum S&F data storage quota for the UE;
a second requesting unit used to, when the second server allows increase of the on-board network maximum S&F data storage quota for the UE, request the UE and the core network device to update the on-board network maximum S&F data storage quota of the UE, respectively;
a sixth processing unit used to, in a case where the UE and the core network device allow updating of the on-board network maximum S&F data storage quota of the UE, based on a third store-and-forward state, update the on-board store-and-forward parameters of the UE and/or the on-board equipment stored locally; where the third store-and-forward state is obtained through the UE and the core network device, and the third store-and-forward state includes store-and-forward states of the UE and/or the on-board equipment;
a sixth transmission unit used to transmit a retransmission request for the downlink data to the second server;
a seventh receiving unit used to receive a retransmission response returned by the second server after the second server determines that the downlink data does not exceed the on-board network maximum S&F data retention.

In some embodiments, the device of the present disclosure further includes:
a seventh processing unit used to, when it is determined, according to the on-board network maximum S&F data storage quota remaining available for the UE, that the on-board network data storage space used by the UE has reached an alarm threshold, determine a forwarding strategy for cached data;
a seventh transmission unit used to transmit a sixth notification to the core network device, where the sixth notification is used to notify that the on-board network data storage space used by the UE has reached the alarm threshold. The forwarding strategy includes:
rejecting to forward newly added data in the cached data;
for first data other than the newly added data in the cached data, forwarding the first data according to pre-obtained forwarding priorities corresponding to the first data.

In some embodiments, the forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

In some embodiments, the device of the present disclosure further includes:
an eighth receiving unit used to receive forwarding priorities corresponding to different data transmitted by the second server.

In some embodiments, the device of the present disclosure further includes:
an eighth processing unit used to, when receiving newly added downlink data from the second server, reject to forward the newly added downlink data according to the forwarding strategy;
an eighth transmission unit used to transmit a seventh notification for rejecting transmission of the newly added downlink data to the second server; where the seventh notification includes a reason for rejecting transmission of the data.

The device for implementing the on-board store-and-forward function of the embodiment of the present disclosure determines a third on-board store-and-forward parameter according to one or more of a data service request, UE capability information, a first on-board store-and-forward parameter transmitted by a core network device and pre-configured second on-board store-and-forward parameter. Through the above processing, the device involved in the satellite communication service can obtain the on-board store-and-forward parameter, thereby assisting the network to implement the on-board communication service.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted here that the above device provided in the embodiment of the present disclosure can implement all the method steps implemented by the above method embodiment, and can achieve the same technical effect. The parts and beneficial effects of this embodiment that are the same as the method embodiment will not be described in detail here.

One embodiment of the present disclosure further provides a processor-readable storage medium, which stores a computer program. The computer program is used to cause a processor to perform the following steps:

determining a third on-board store-and-forward parameter according to one or more of a data service request, UE capability information, a first on-board store-and-forward parameter transmitted by a core network device and pre-configured second on-board store-and-forward parameter.

When executed by a processor, this program can realize all implementations of the above method embodiment applied to the server side as shown in FIG. 3. To avoid repetition, these details will not be reiterated here.

When the program is executed by a processor, it can implement all implementations of the above method embodiment applied to the server side as shown in FIG. 3, which are not described here to avoid repetition.

As shown in FIG. 12, one embodiment of the present disclosure further provides a user equipment (UE), including: a memory 1220, a transceiver 1200, and a processor 1210. The memory 1220 is used to store a program instruction. The transceiver 1200 is used to send and receive data under the control of the processor 1210. The processor 1210 is used to read the program instruction in the memory 1220 and perform the following operations:

receiving a third on-board store-and-forward parameter transmitted by a first server;

updating a target on-board store-and-forward parameter that match itself according to one or more of the third on-board store-and-forward parameter, the first on-board store-and-forward parameter transmitted by the core network device and the pre-configured fourth on-board store-and-forward parameter; and performing on-board store-and-forward processing based on the target on-board store-and-forward parameter.

In FIG. 12, a bus architecture may include any number of interconnected bus and bridge. Specifically, various circuits of one or more processors, which are represented by the processor 1210, and one or more memories, which are represented by the memory 1220, are linked together. The bus architecture may link various other circuits, such as a peripheral device, voltage regulator and a power management circuit together. These features are well known in this field; therefore, this disclosure does not make further description on these features. The bus interface provides an interface. The transceiver 1200 may be multiple elements, including a transmitter and a receiver and provide units, which communicate with other devices on the transmission medium. The transmission medium includes radio channels, wired channels, optical cables, etc. For different UEs, a user interface 1230 may be an interface that can be connected to external or internal devices. The connected devices include but are not limited to a small keyboard, a display, a speaker, a microphone, a joystick, etc.

The processor 1210 is responsible for managing the bus architecture and the normal processing. The memory 1220 may be used to store data used by the processor 1210 for performing operations.

Optionally, the processor 1210 may be a central processing unit (CPU), an application specific integrated circuit (ASIC), a field-programmable gate array (FPGA) or a complex programmable logic device (CPLD). The processor 1210 may also adopt multi-core architecture.

The processor 1210 calls the computer program stored in the memory to execute any method provided in the embodiment of the present disclosure according to obtained executable instructions. The processor 1210 and the memory 1220 may also be arranged physically separately.

In some embodiments, the operations further include:
transmitting a first request to the first server; where the first request is used to request reporting or updating UE capability information, and the first request carries the UE capability information;
receiving a first response to the first request transmitted by the first server.

In some embodiments, the UE capability information includes one or more of the following information:
identifier of a servicing satellite;
supported satellite access mode;
support on-board S&F mode;
on-board store-and-forward parameter.

In some embodiments, the operations further include:
transmitting a second request to the first server; where the second request is used to request to query on-board store-and-forward parameters required by the application layer network;
receiving a second response transmitted by the first server; where the second response includes the third on-board store-and-forward parameter, and the third on-board store-and-forward parameter is an on-board storage-and-forward parameter queried through the first server.

In some embodiments, each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

In some embodiments, the operations further include:
if there is uplink data to be transmitted and there is no uplink satellite connection, caching the uplink data and starting a first timer;
when an uplink satellite connection is detected, if the first timer does not exceed the maximum S&F data retention and an amount of cached uplink data does not exceed the on-board network maximum S&F data storage quota, transmitting the cached uplink data to the first server; or,
when an uplink satellite connection is detected, if the first timer exceeds the on-board network maximum S&F data retention, and/or the cached uplink data exceeds the on-board network maximum S&F data storage quota, processing the cached uplink data according to a preset strategy.

In some embodiments, the processing, by the processor, the cached uplink data according to a preset strategy includes one or more of the following:
discarding the uplink data;
negotiating with the network whether to retransmit the uplink data;
transmitting the uplink data in segments, where each segment of uplink data is smaller than or equal to the on-board network maximum S&F data storage quota.

In some embodiments, the operations further include:
receiving first subscription information transmitted by the first server; where the first subscription information is subscription information related to a store-and-forward state for the UE, and the first subscription information includes subscribing to changes in the on-board network data storage space of the UE;
when the on-board network data storage space for the UE changes, transmitting a first notification to the first server; where the first notification is used to notify a first store-and-forward state of the UE, and the first store-and-forward state includes an on-board network data storage space used by the UE and/or a remaining on-board network data storage space of the UE.

In some embodiments, the operations further include:
receiving a first subscription request transmitted by the first server; where the first subscription request includes the first subscription information.

According to the UE of the embodiment of the present disclosure, by receiving a third on-board store-and-forward parameter transmitted by a first server, updating a target on-board store-and-forward parameter that matches itself according to one or more of the third on-board store-and-forward parameter, the first on-board store-and-forward parameter transmitted by a core network device and a preconfigured fourth on-board store-and-forward parameter, and performing on-board store-and-forward processing based on the target on-board store-and-forward parameter, the obtained on-board store-and-forward parameter can assist the network in implementing on-board communication services.

As shown in FIG. 13, one embodiment of the present disclosure further provides a device for implementing on-board store-and-forward function, including:
a first receiving unit 1301 used to receive a third on-board store-and-forward parameter transmitted by a first server;
a second processing unit 1302 used to update a target on-board store-and-forward parameter that match itself according to one or more of the third on-board store-and-forward parameter, the first on-board store-and-forward parameter transmitted by the core network device and the pre-configured fourth on-board store-and-forward parameter; and perform on-board store-and-forward processing based on the target on-board store-and-forward parameter.

In some embodiments, the device of the present disclosure further includes:
a ninth transmission unit used to transmit a first request to the first server; where the first request is used to request reporting or updating UE capability information, and the first request carries the UE capability information;
a ninth receiving unit used to receive a first response to the first request transmitted by the first server.

In some embodiments, the UE capability information includes one or more of the following information:
identifier of a servicing satellite;
supported satellite access mode;
support on-board S&F mode;
on-board store-and-forward parameter.

In some embodiments, the device of the present disclosure further includes:
a tenth transmission unit used to transmit a second request to the first server; where the second request is used to request to query on-board store-and-forward parameters required by the application layer network.

The first receiving unit 1301 is specifically used to:
receive a second response transmitted by the first server; where the second response includes the third on-board store-and-forward parameter, and the third on-board store-and-forward parameter is an on-board storage-and-forward parameter queried through the first server.

In some embodiments, each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

In some embodiments, accordingly, the second processing unit 1302 is specifically used to:
if there is uplink data to be transmitted and there is no uplink satellite connection, cach the uplink data and starting a first timer;
when an uplink satellite connection is detected, if the first timer does not exceed the maximum S&F data retention and an amount of cached uplink data does not exceed the on-board network maximum S&F data storage quota, transmit the cached uplink data to the first server; or,
when an uplink satellite connection is detected, if the first timer exceeds the on-board network maximum S&F data retention, and/or the cached uplink data exceeds the on-board network maximum S&F data storage quota, process the cached uplink data according to a preset strategy.

In some embodiments, the processing the cached uplink data according to a preset strategy includes one or more of the following:
discarding the uplink data;
negotiating with the network whether to retransmit the uplink data;
transmitting the uplink data in segments, where each segment of uplink data is smaller than or equal to the on-board network maximum S&F data storage quota.

In some embodiments, the device of the present disclosure further includes:
a tenth receiving unit used to receive first subscription information transmitted by the first server; where the first subscription information is subscription information related to a store-and-forward state for the UE, and the first subscription information includes subscribing to changes in the on-board network data storage space of the UE;
an eleventh transmission unit used to, when the on-board network data storage space for the UE changes, transmit a first notification to the first server; where the first notification is used to notify a first store-and-forward state of the UE, and the first store-and-forward state includes an on-board network data storage space used by the UE and/or a remaining on-board network data storage space of the UE.

In some embodiments, the tenth receiving unit is specifically used to:
receive a first subscription request transmitted by the first server; where the first subscription request includes the first subscription information.

According to the device for implementing on-board store-and-forward function of the embodiment of the present disclosure, by receiving a third on-board store-and-forward parameter transmitted by a first server, updating a target on-board store-and-forward parameter that matches itself according to one or more of the third on-board store-and-forward parameter, the first on-board store-and-forward parameter transmitted by a core network device and a preconfigured fourth on-board store-and-forward parameter, and performing on-board store-and-forward processing based on the target on-board store-and-forward parameter, the obtained on-board store-and-forward parameter can assist the network in implementing on-board communication services.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted here that the above device provided in the embodiment of the present disclosure can implement all the method steps implemented by the above method embodiment, and can achieve the same technical effect. The parts and beneficial effects of this embodiment that are the same as the method embodiment will not be described in detail here.

One embodiment of the present disclosure further provides a processor-readable storage medium, which stores a computer program. The computer program is used to cause a processor to perform the following steps:
receiving a third on-board store-and-forward parameter transmitted by a first server;
updating a target on-board store-and-forward parameter that match itself according to one or more of the third on-board store-and-forward parameter, the first on-board store-and-forward parameter transmitted by the core network device and the pre-configured fourth on-board store-and-forward parameter; and performing on-board store-and-forward processing based on the target on-board store-and-forward parameter.

When the program is executed by a processor, it can implement all implementations of the above method embodiment applied to the UE side as shown in FIG. 7, which are not described here to avoid repetition.

The technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

The terminal involved in the embodiments of the present disclosure may be referred to as a terminal device, which may be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A method for implementing on-board store-and-forward function, applied to a first server, comprising:
determining a third on-board store-and-forward parameter according to one or more of a data service request, user equipment (UE) capability information, a first on-board store-and-forward parameter transmitted by a core network device and pre-configured second on-board store-and-forward parameter.

2. The method according to claim 1, wherein the method further includes:
transmitting the third on-board store-and-forward parameter to at least one of a UE, a second server and the core network device.

3. The method according to claim 1, wherein the method further includes:
receiving a first request transmitted by a UE; wherein the first request is used to request reporting or updating the UE capability information, and the first request carries the UE capability information;
after the UE is authenticated, transmitting a first response to the UE, and storing or updating the UE capability information.

4. The method according to claim 1 or 3, wherein the UE capability information includes one or more of the following information:
identifier of a servicing satellite;
supported satellite access mode;
support on-board S&F mode;
on-board store-and-forward parameter.

5. The method according to claim 2, wherein the method further includes:
receiving a second request transmitted by the UE; wherein the second request is used to request to query an on-board store-and-forward parameter required by an application layer network;
wherein the transmitting the third on-board store-and-forward parameter to the UE, includes:
after the UE is authenticated, transmitting a second response to the UE; wherein the second response includes the third on-board store-and-forward parameter, and the third on-board store-and-forward parameter is an on-board store-and-forward parameter queried through the first server.

6. The method according to claim 1, wherein each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

7. The method according to claim 1, wherein the method further includes:
receiving a data service request transmitted by a second server; wherein the data service request includes time for data transmission and a maximum data transfer volume within a preset time.

8. The method according to claim 1, wherein the method further includes:
receiving a data service change request transmitted by a second server; wherein the data service change request is used to request to update or delete an on-board store-and-forward parameter;
changing a locally stored on-board store-and-forward parameter based on the data service change request;
transmitting a changed on-board store-and-forward parameter to at least one of a UE, the second server and the core network device.

9. The method according to claim 1, wherein the method further includes:
transmitting first subscription information to a UE and transmitting second subscription information to the core network device, respectively; wherein the first subscription information is subscription information related to a store-and-forward state for the UE, and the second subscription information is subscription information related to a store-and-forward state for the UE and/or an on-board equipment;
receiving a first notification transmitted by the UE and a second notification transmitted by the core network device, respectively; wherein the first notification is used to notify a first store-and-forward state of the UE, and the second notification is used to notify a second store-and-forward state;
updating on-board store-and-forward parameters of the UE and/or on-board equipment stored locally according to the first store-and-forward state and the second store-and-forward state;
according to the updated on-board store-and-forward parameters, determining on-board network maximum S&F data storage quota and on-board network maximum S&F data retention remaining available to the UE.

10. The method according to claim 9, wherein the transmitting first subscription information to the UE, includes:
transmitting a first subscription request to the UE; wherein the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

11. The method according to claim 9, wherein the transmitting second subscription information to the core network device, includes:
transmitting a second subscription request to the core network device; wherein the second subscription request includes the second subscription information.

12. The method according to claim 9, wherein the method further includes:
when an amount of downlink data received from a second server exceeds the UE's remaining available on-board network maximum S&F data storage quota, performing one of the following:
transmitting a third notification for suspending transmission of downlink data to the second server; wherein the third notification includes on-board network maximum S&F data retention and a reason for suspending transmission of data;
transmitting a fourth notification for rejecting transmission of the downlink data to the second server; wherein the fourth notification includes a reason for rejecting transmission of the data;
transmitting a first part of downlink data to the UE, and transmitting a fifth notification to the second server; wherein a data volume of the first part of downlink data is equal to the on-board network maximum S&F data storage quota remaining available to the UE, and the fifth notification is a notification for rejecting transmission of a remaining part of the downlink data, and the fifth notification includes the reason for rejecting transmission of the data.

13. The method according to claim 12, wherein after transmitting the third notification for suspending transmission of downlink data to the second server, the method further includes:
requesting the second server to increase the on-board network maximum S&F data storage quota for the UE;
when the second server allows increase of the on-board network maximum S&F data storage quota for the UE, requesting the UE and the core network device to update the on-board network maximum S&F data storage quota of the UE, respectively;
in a case where the UE and the core network device allow updating of the on-board network maximum S&F data storage quota of the UE, based on a third store-and-forward state, updating the on-board store-and-forward parameters of the UE and/or the on-board equipment stored locally; wherein the third store-and-forward state is obtained through the UE and the core network device, and the third store-and-forward state includes store-and-forward states of the UE and/or the on-board equipment;
transmitting a retransmission request for the downlink data to the second server;
receiving a retransmission response returned by the second server after the second server determines that the downlink data does not exceed the on-board network maximum S&F data retention.

14. The method according to claim 9, wherein the method further includes:
when determining, according to the on-board network maximum S&F data storage quota remaining available for the UE, that the on-board network data storage space used by the UE has reached an alarm threshold, determining a forwarding strategy for cached data, and transmitting a sixth notification to the core network device; wherein the sixth notification is used to notify that the on-board network data storage space used by the UE has reached the alarm threshold; and the forwarding strategy includes:
rejecting to forward newly added data in the cached data;
for first data other than the newly added data in the cached data, forwarding the first data according to pre-obtained forwarding priorities corresponding to the first data.

15. The method according to claim 14, wherein the forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

16. The method according to claim 14, wherein the method further includes:
receiving forwarding priorities corresponding to different data transmitted by the second server.

17. The method according to claim 14, wherein the method further includes:
when receiving newly added downlink data from the second server, rejecting to forward the newly added downlink data according to the forwarding strategy;
transmitting a seventh notification for rejecting transmission of the newly added downlink data to the second server; wherein the seventh notification includes a reason for rejecting transmission of the data.

18. A method for implementing on-board store-and-forward function, applied to a user equipment (UE), comprising:
receiving a third on-board store-and-forward parameter transmitted by a first server;
updating a target on-board store-and-forward parameter that match itself according to one or more of the third on-board store-and-forward parameter, a first on-board store-and-forward parameter transmitted by a core network device and a pre-configured fourth on-board store-and-forward parameter; and performing on-board store-and-forward processing based on the target on-board store-and-forward parameter.

19. The method according to claim 18, wherein the method further includes:
transmitting a first request to the first server; wherein the first request is used to request reporting or updating UE capability information, and the first request carries the UE capability information;
receiving a first response to the first request transmitted by the first server.

20. The method according to claim 19, wherein the UE capability information includes one or more of the following information:
identifier of a servicing satellite;
supported satellite access mode;
support on-board S&F mode;
on-board store-and-forward parameter.

21. The method according to claim 18, wherein the method further includes:
transmitting a second request to the first server; wherein the second request is used to request to query an on-board store-and-forward parameter required by an application layer network;
wherein the receiving a first response to the first request transmitted by the first server, includes:
receiving a second response transmitted by the first server; wherein the second response includes the third on-board store-and-forward parameter, and the third on-board store-and-forward parameter is an on-board storage-and-forward parameter queried through the first server.

22. The method according to claim 18, wherein each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

23. The method according to claim 22, wherein the performing on-board store-and-forward processing based on the target on-board store-and-forward parameter, includes:
if there is uplink data to be transmitted and there is no uplink satellite connection, caching the uplink data and starting a first timer;
when an uplink satellite connection is detected, if the first timer does not exceed the maximum S&F data retention and an amount of cached uplink data does not exceed the on-board network maximum S&F data storage quota, transmitting the cached uplink data to the first server; or,
when an uplink satellite connection is detected, if the first timer exceeds the on-board network maximum S&F data retention, and/or the cached uplink data exceeds the on-board network maximum S&F data storage quota, processing the cached uplink data according to a preset strategy.

24. The method according to claim 23, wherein the processing the cached uplink data according to a preset strategy, one or more of the following:
discarding the uplink data;
negotiating with the network whether to retransmit the uplink data;
transmitting the uplink data in segments, wherein each segment of uplink data is smaller than or equal to the on-board network maximum S&F data storage quota.

25. The method according to claim 18, wherein the method further includes:
receiving first subscription information transmitted by the first server; wherein the first subscription information is subscription information related to a store-and-forward state for the UE, and the first subscription information includes subscribing to changes in the on-board network data storage space of the UE;
when the on-board network data storage space for the UE changes, transmitting a first notification to the first server; wherein the first notification is used to notify a first store-and-forward state of the UE, and the first store-and-forward state includes an on-board network data storage space used by the UE and/or a remaining on-board network data storage space of the UE.

26. The method according to claim 25, wherein the receiving first subscription information transmitted by the first server, includes:
receiving a first subscription request transmitted by the first server; wherein the first subscription request includes the first subscription information.

27. A first server, comprising: a memory, a transceiver, and a processor; wherein the memory is used to store a program instruction; the transceiver is used to send and receive data under control of the processor; the processor is used to read the program instruction in the memory and perform the following operations:
determining a third on-board store-and-forward parameter according to one or more of a data service request, user equipment (UE) capability information, a first on-board store-and-forward parameter transmitted by a core network device and pre-configured second on-board store-and-forward parameter.

28. The first server according to claim 27, wherein the operations further include:
transmitting the third on-board store-and-forward parameter to at least one of a UE, a second server and the core network device.

29. The first server according to claim 27, wherein the operations further include:
receiving a first request transmitted by a UE; wherein the first request is used to request reporting or updating the UE capability information, and the first request carries the UE capability information;
after the UE is authenticated, transmitting a first response to the UE, and storing or updating the UE capability information.

30. The first server according to claim 27 or 29, wherein the UE capability information includes one or more of the following information:
identifier of a servicing satellite;
supported satellite access mode;
support on-board S&F mode;
on-board store-and-forward parameter.

31. The first server according to claim 28, wherein the operations further include:
receiving a second request transmitted by the UE; wherein the second request is used to request to query an on-board store-and-forward parameter required by an application layer network;
wherein the transmitting the third on-board store-and-forward parameter to the UE, includes:
after the UE is authenticated, transmitting a second response to the UE; wherein the second response includes the third on-board store-and-forward parameter, and the third on-board store-and-forward parameter is an on-board store-and-forward parameter queried through the first server.

32. The first server according to claim 27, wherein each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

33. The first server according to claim 27, wherein the operations further include:
receiving a data service request transmitted by a second server; wherein the data service request includes time for data transmission and a maximum data transfer volume within a preset time.

34. The first server according to claim 27, wherein the operations further include:
receiving a data service change request transmitted by a second server; wherein the data service change request is used to request to update or delete an on-board store-and-forward parameter;
changing a locally stored on-board store-and-forward parameter based on the data service change request;
transmitting a changed on-board store-and-forward parameter to at least one of a UE, the second server and the core network device.

35. The first server according to claim 27, wherein the operations further include:
transmitting first subscription information to a UE and transmitting second subscription information to the core network device, respectively; wherein the first subscription information is subscription information related to a store-and-forward state for the UE, and the second subscription information is subscription information related to a store-and-forward state for the UE and/or an on-board equipment;
receiving a first notification transmitted by the UE and a second notification transmitted by the core network device, respectively; wherein the first notification is used to notify a first store-and-forward state of the UE, and the second notification is used to notify a second store-and-forward state;
updating on-board store-and-forward parameters of the UE and/or on-board equipment stored locally according to the first store-and-forward state and the second store-and-forward state;
according to the updated on-board store-and-forward parameters, determining on-board network maximum S&F data storage quota and on-board network maximum S&F data retention remaining available to the UE.

36. The first server according to claim 35, wherein the operations further include:
transmitting a first subscription request to the UE; wherein the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

37. The first server according to claim 35, wherein the operations further include:
transmitting a second subscription request to the core network device; wherein the second subscription request includes the second subscription information.

38. The first server according to claim 35, wherein the operations further include:
when an amount of downlink data received from a second server exceeds the UE's remaining available on-board network maximum S&F data storage quota, performing one of the following:
transmitting a third notification for suspending transmission of downlink data to the second server; wherein the third notification includes on-board network maximum S&F data retention and a reason for suspending transmission of data;
transmitting a fourth notification for rejecting transmission of the downlink data to the second server; wherein the fourth notification includes a reason for rejecting transmission of the data;
transmitting a first part of downlink data to the UE, and transmitting a fifth notification to the second server; wherein a data volume of the first part of downlink data is equal to the on-board network maximum S&F data storage quota remaining available to the UE, and the fifth notification is a notification for rejecting transmission of a remaining part of the downlink data, and the fifth notification includes the reason for rejecting transmission of the data.

39. The first server according to claim 38, wherein the operations further include:
requesting the second server to increase the on-board network maximum S&F data storage quota for the UE;
when the second server allows increase of the on-board network maximum S&F data storage quota for the UE, requesting the UE and the core network device to update the on-board network maximum S&F data storage quota of the UE, respectively;
in a case where the UE and the core network device allow updating of the on-board network maximum S&F data storage quota of the UE, based on a third store-and-forward state, updating the on-board store-and-forward parameters of the UE and/or the on-board equipment stored locally; wherein the third store-and-forward state is obtained through the UE and the core network device, and the third store-and-forward state includes store-and-forward states of the UE and/or the on-board equipment;
transmitting a retransmission request for the downlink data to the second server;
receiving a retransmission response returned by the second server after the second server determines that the downlink data does not exceed the on-board network maximum S&F data retention.

40. The first server according to claim 36, wherein the operations further include:
when determining, according to the on-board network maximum S&F data storage quota remaining available for the UE, that the on-board network data storage space used by the UE has reached an alarm threshold, determining a forwarding strategy for cached data, and transmitting a sixth notification to the core network device; wherein the sixth notification is used to notify that the on-board network data storage space used by the UE has reached the alarm threshold; and the forwarding strategy includes:
rejecting to forward newly added data in the cached data;
for first data other than the newly added data in the cached data, forwarding the first data according to pre-obtained forwarding priorities corresponding to the first data.

41. The first server according to claim 40, wherein the forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

42. The first server according to claim 40, wherein the operations further include:
receiving forwarding priorities corresponding to different data transmitted by the second server.

43. The first server according to claim 40, wherein the operations further include:
when receiving newly added downlink data from the second server, rejecting to forward the newly added downlink data according to the forwarding strategy;
transmitting a seventh notification for rejecting transmission of the newly added downlink data to the second server; wherein the seventh notification includes a reason for rejecting transmission of the data.

44. A device for implementing on-board store-and-forward function, comprising:
a first processing unit used to determine a third on-board store-and-forward parameter according to one or more of a data service request, user equipment (UE) capability information, a first on-board store-and-forward parameter transmitted by a core network device and pre-configured second on-board store-and-forward parameter.

45. The device according to claim 44, wherein the device further includes:
a first transmission unit used to transmit the third on-board store-and-forward parameter to at least one of a UE, a second server and the core network device.

46. The device according to claim 44, wherein the device further includes:
a second receiving unit used to receive a first request transmitted by a UE; wherein the first request is used to request reporting or updating the UE capability information, and the first request carries the UE capability information;
a second transmission unit used to, after the UE is authenticated, transmit a first response to the UE, and storing or updating the UE capability information.

47. The device according to claim 44 or 46, wherein the UE capability information includes one or more of the following information:
identifier of a servicing satellite;
supported satellite access mode;
support on-board S&F mode;
on-board store-and-forward parameter.

48. The device according to claim 45, wherein the device further includes:
a third receiving unit used to receive a second request transmitted by the UE; wherein the second request is used to request to query an on-board store-and-forward parameter required by an application layer network;
wherein the first transmission unit is further used to:
after the UE is authenticated, transmit a second response to the UE; wherein the second response includes the third on-board store-and-forward parameter, and the third on-board store-and-forward parameter is an on-board store-and-forward parameter queried through the first server.

49. The device according to claim 44, wherein each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

50. The device according to claim 44, wherein the device further includes:
a fourth receiving unit used to receive a data service request transmitted by a second server; wherein the data service request includes time for data transmission and a maximum data transfer volume within a preset time.

51. The device according to claim 44, wherein the device further includes:
a fifth receiving unit used to receive a data service change request transmitted by a second server; wherein the data service change request is used to request to update or delete an on-board store-and-forward parameter;
a third processing unit used to change a locally stored on-board store-and-forward parameter based on the data service change request;
a third transmission unit used to transmit a changed on-board store-and-forward parameter to at least one of a UE, the second server and the core network device.

52. The device according to claim 44, wherein the device further includes:
a fourth transmission unit used to transmit first subscription information to a UE and transmit second subscription information to the core network device, respectively; wherein the first subscription information is subscription information related to a store-and-forward state for the UE, and the second subscription information is subscription information related to a store-and-forward state for the UE and/or an on-board equipment;
a sixth receiving unit used to receive a first notification transmitted by the UE and a second notification transmitted by the core network device, respectively; wherein the first notification is used to notify a first store-and-forward state of the UE, and the second notification is used to notify a second store-and-forward state;
a fourth processing unit used to update on-board store-and-forward parameters of the UE and/or on-board equipment stored locally according to the first store-and-forward state and the second store-and-forward state;
a fifth processing unit used to, according to the updated on-board store-and-forward parameters, determine on-board network maximum S&F data storage quota and on-board network maximum S&F data retention remaining available to the UE.

53. The device according to claim 52, wherein the fourth transmission unit is used to:
transmit a first subscription request to the UE; wherein the first subscription request includes the first subscription information, the first subscription information includes subscribing to changes in the on-board network data storage space of the UE; and the first store-and-forward state includes an on-board network data storage space used by the UE and/or a remaining on-board network data storage space of the UE.

54. The device according to claim 52, wherein the fourth transmission unit is used to:
transmit a second subscription request to the core network device; wherein the second subscription request includes the second subscription information.

55. The device according to claim 52, wherein the device further includes:
a fifth transmission unit used to, when an amount of downlink data received from a second server exceeds the UE's remaining available on-board network maximum S&F data storage quota, perform one of the following:
transmitting a third notification for suspending transmission of downlink data to the second server; wherein the third notification includes on-board network maximum S&F data retention and a reason for suspending transmission of data;
transmitting a fourth notification for rejecting transmission of the downlink data to the second server; wherein the fourth notification includes a reason for rejecting transmission of the data;
transmitting a first part of downlink data to the UE, and transmitting a fifth notification to the second server; wherein a data volume of the first part of downlink data is equal to the on-board network maximum S&F data storage quota remaining available to the UE, and the fifth notification is a notification for rejecting transmission of a remaining part of the downlink data, and the fifth notification includes the reason for rejecting transmission of the data.

56. The device according to claim 55, wherein the device further includes:
a first request unit used to request the second server to increase the on-board network maximum S&F data storage quota for the UE;
a second request unit used to, when the second server allows increase of the on-board network maximum S&F data storage quota for the UE, request the UE and the core network device to update the on-board network maximum S&F data storage quota of the UE, respectively;
a sixth processing unit used to, in a case where the UE and the core network device allow updating of the on-board network maximum S&F data storage quota of the UE, based on a third store-and-forward state, update the on-board store-and-forward parameters of the UE and/or the on-board equipment stored locally; wherein the third store-and-forward state is obtained through the UE and the core network device, and the third store-and-forward state includes store-and-forward states of the UE and/or the on-board equipment;
a sixth transmission unit used to transmit a retransmission request for the downlink data to the second server;
a seventh receiving unit used to receive a retransmission response returned by the second server after the second server determines that the downlink data does not exceed the on-board network maximum S&F data retention.

57. The device according to claim 52, wherein the device further includes:
a seventh processing unit used to, when determining, according to the on-board network maximum S&F data storage quota remaining available for the UE, that the on-board network data storage space used by the UE has reached an alarm threshold, determine a forwarding strategy for cached data,
a seventh transmission unit used to transmit a sixth notification to the core network device, wherein the sixth notification is used to notify that the on-board network data storage space used by the UE has reached the alarm threshold; wherein the forwarding strategy includes:
rejecting to forward newly added data in the cached data;
for first data other than the newly added data in the cached data, forwarding the first data according to pre-obtained forwarding priorities corresponding to the first data.

58. The device according to claim 57, wherein the forwarding the first data according to pre-obtained forwarding priorities corresponding to the first data, includes:
if the first data is emergency service data, forwarding preferentially the first data;
if the first data is important service data, forwarding preferentially the first data;
if the first data is important user data, forwarding preferentially the first data;
if the first data is data with high quality of service requirements for location services, forwarding preferentially the first data;
if the first data is data with high quality of experience requirements, forwarding preferentially the first data.

59. The device according to claim 57, wherein the device further includes:
an eighth receiving unit used to receive forwarding priorities corresponding to different data transmitted by the second server.

60. The device according to claim 57, wherein the device further includes:
a processing unit used to, when receiving newly added downlink data from the second server, reject to forward the newly added downlink data according to the forwarding strategy;
an eighth transmission unit used to transmit a seventh notification for rejecting transmission of the newly added downlink data to the second server; wherein the seventh notification includes a reason for rejecting transmission of the data.

61. A user equipment (UE), comprising: a memory, a transceiver, and a processor; wherein the memory is used to store a program instruction; the transceiver is used to send and receive data under control of the processor; the processor is used to read the program instruction in the memory and perform the following operations:
receiving a third on-board store-and-forward parameter transmitted by a first server;
updating a target on-board store-and-forward parameter that match itself according to one or more of the third on-board store-and-forward parameter, a first on-board store-and-forward parameter transmitted by a core network device and the pre-configured fourth on-board store-and-forward parameter; and performing on-board store-and-forward processing based on the target on-board store-and-forward parameter.

62. The UE according to claim 61, wherein the operations further include:
transmitting a first request to the first server; wherein the first request is used to request reporting or updating UE capability information, and the first request carries the UE capability information;
receiving a first response to the first request transmitted by the first server.

63. The UE according to claim 62, wherein the UE capability information includes one or more of the following information:
identifier of a servicing satellite;
supported satellite access mode;
support on-board S&F mode;
on-board store-and-forward parameter.

64. The UE according to claim 61, wherein the operations further include:
transmitting a second request to the first server; wherein the second request is used to request to query an on-board store-and-forward parameter required by an application layer network;
wherein the receiving a first response to the first request transmitted by the first server, includes:
receiving a second response transmitted by the first server; wherein the second response includes the third on-board store-and-forward parameter, and the third on-board store-and-forward parameter is an on-board storage-and-forward parameter queried through the first server.

65. The UE according to claim 61 wherein each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

66. The UE according to claim 65, wherein the operations further include:
if there is uplink data to be transmitted and there is no uplink satellite connection, caching the uplink data and starting a first timer;
when an uplink satellite connection is detected, if the first timer does not exceed the maximum S&F data retention and an amount of cached uplink data does not exceed the on-board network maximum S&F data storage quota, transmitting the cached uplink data to the first server; or,
when an uplink satellite connection is detected, if the first timer exceeds the on-board network maximum S&F data retention, and/or the cached uplink data exceeds the on-board network maximum S&F data storage quota, processing the cached uplink data according to a preset strategy.

67. The UE according to claim 66, wherein the processing, by the processor, the cached uplink data according to a preset strategy, includes one or more of the following:
discarding the uplink data;
negotiating with the network whether to retransmit the uplink data;
transmitting the uplink data in segments, wherein each segment of uplink data is smaller than or equal to the on-board network maximum S&F data storage quota.

68. The UE according to claim 61, wherein the operations further include:
receiving first subscription information transmitted by the first server; wherein the first subscription information is subscription information related to a store-and-forward state for the UE, and the first subscription information includes subscribing to changes in the on-board network data storage space of the UE;
when the on-board network data storage space for the UE changes, transmitting a first notification to the first server; wherein the first notification is used to notify a first store-and-forward state of the UE, and the first store-and-forward state includes an on-board network data storage space used by the UE and/or a remaining on-board network data storage space of the UE.

69. The UE according to claim 68, wherein the operations further include:
receiving a first subscription request transmitted by the first server; wherein the first subscription request includes the first subscription information.

70. A device for implementing an on-board store-and-forward function, comprising:
a first receiving unit used to receive a third on-board store-and-forward parameter transmitted by a first server;
a second processing unit used to update a target on-board store-and-forward parameter that match itself according to one or more of the third on-board store-and-forward parameter, a first on-board store-and-forward parameter transmitted by a core network device and a pre-configured fourth on-board store-and-forward parameter; and perform on-board store-and-forward processing based on the target on-board store-and-forward parameter.

71. The device according to claim 70, wherein the device further includes:
a ninth transmission unit used to transmit a first request to the first server; wherein the first request is used to request reporting or updating UE capability information, and the first request carries the UE capability information;
a ninth receiving unit used to receive a first response to the first request transmitted by the first server.

72. The device according to claim 71, wherein the UE capability information includes one or more of the following information:
identifier of a servicing satellite;
supported satellite access mode;
support on-board S&F mode;
on-board store-and-forward parameter.

73. The device according to claim 70, wherein the device further includes:
a tenth transmission unit used to transmit a second request to the first server; wherein the second request is used to request to query on-board store-and-forward parameters required by an application layer network;
wherein the first receiving unit is further used to:
receive a second response transmitted by the first server; wherein the second response includes the third on-board store-and-forward parameter, and the third on-board store-and-forward parameter is an on-board storage-and-forward parameter queried through the first server.

74. The device according to claim 70, wherein each on-board store-and-forward parameter includes:
on-board network maximum S&F data storage quota for UEs and/or services;
on-board network maximum S&F data retention for UEs and/or services;
forwarding priority for UEs and/or services;
reception confirmation strategy for UEs and/or services.

75. The device according to claim 74, wherein the second processing unit is further used to:
if there is uplink data to be transmitted and there is no uplink satellite connection, cache the uplink data and starting a first timer;
when an uplink satellite connection is detected, if the first timer does not exceed the maximum S&F data retention and an amount of cached uplink data does not exceed the on-board network maximum S&F data storage quota, transmit the cached uplink data to the first server; or,
when an uplink satellite connection is detected, if the first timer exceeds the on-board network maximum S&F data retention, and/or the cached uplink data exceeds the on-board network maximum S&F data storage quota, process the cached uplink data according to a preset strategy.

76. The device according to claim 75, wherein the processing the cached uplink data according to a preset strategy, includes one or more of the following:
discarding the uplink data;
negotiating with the network whether to retransmit the uplink data;
transmitting the uplink data in segments, wherein each segment of uplink data is smaller than or equal to the on-board network maximum S&F data storage quota.

77. The device according to claim 70, wherein the device further includes:
a tenth receiving unit used to receive first subscription information transmitted by the first server; wherein the first subscription information is subscription information related to a store-and-forward state for the UE, and the first subscription information includes subscribing to changes in the on-board network data storage space of the UE;
an eleventh transmission unit used to, when the on-board network data storage space for the UE changes, transmit a first notification to the first server; wherein the first notification is used to notify a first store-and-forward state of the UE, and the first store-and-forward state includes an on-board network data storage space used by the UE and/or a remaining on-board network data storage space of the UE.

78. The device according to claim 77, wherein the tenth receiving unit is further used to:
receive a first subscription request transmitted by the first server; wherein the first subscription request includes the first subscription information.

79. A processor-readable storage medium, comprising: a computer program stored thereon; wherein the computer program is used to cause a processor to execute steps of the method for implementing on-board store-and-forward function according to any one of claims 1 to 17, or the computer program is used to cause the processor to execute steps of the method for implementing on-board store-and-forward function according to any one of claims 18 to 26.
